# EUROPEAN PATENT SPECIFICATION

(11) **EP 4 367 395 B1**
(45) Date of publication and mention of the grant of the patent: **11.03.2026**
(21) Application number: 22737743.9
(22) Date of filing: 24.06.2022
(51) Int. Cl.: F03D 80/50, F03D 1/06

(54) **ROBOTIC DEVICE AND METHOD FOR REPAIRING LEADING EDGE DAMAGE ON A WIND TURBINE BLADE WITH ENVIRONMENTAL CONTROLS**
ROBOTERVORRICHTUNG UND VERFAHREN ZUR REPARATUR VON VORDERKANTENSCHÄDEN AN EINER WINDTURBINENSCHAUFEL MIT UMGEBUNGSSTEUERUNGEN
DISPOSITIF ROBOTIQUE ET PROCÉDÉ DE RÉPARATION D'UN DOMMAGE DE BORD D'ATTAQUE SUR UNE PALE D'ÉOLIENNE AVEC UN CONTRÔLE ENVIRONNEMENTAL

(30) Priority: 09.07.2021 DK PA202170371
(43) Date of publication of application: 15.05.2024
(73) Proprietor: BladeRobots A/S, 8200 Aarhus N (DK)
(72) Inventor: J.B.K. JENSEN, Ivar, 8200 Aarhus N (DK); NØRGAARD, Rasmus Sole, 8200 Aarhus N (DK); PETERSEN, Aksel, 8200 Aarhus N (DK); NIELSEN, Claus Engholm, 8200 Aarhus N (DK); SKOV, Christian, 8200 Aarhus N (DK)
(74) Representative: Vestas Patents Department
(86) International application number: PCT/DK2022/050146
(87) International publication number: WO 2023/280361

(56) References cited:
- WO-A1-2021/121521
- DE-A1- 102008 022 699
- DE-U1- 202009 002 054
- US-A1- 2016 046 088
- US-A1- 2019 338 759

## Description

### Technical Field

This application relates generally to wind turbines, and more particularly relates to a robotic device and associated method for repairing damage along the leading edge of a wind turbine blade without necessitating removal of the blade from the tower of the wind turbine and without necessitating manual repairs by rope access technicians.

### Background

Wind turbines are used to produce electrical energy using a renewable resource and without combusting a fossil fuel. Generally, a wind turbine converts kinetic energy from the wind into electrical power. A conventional wind turbine installation includes a foundation, a tower supported by the foundation, and an energy generating unit positioned atop of the tower. The energy generating unit typically includes one or more nacelles to house several mechanical and electrical components, such as a generator, gearbox, and main bearing, and the wind turbine also includes a rotor operatively coupled to the components in the nacelle through a main shaft extending from the nacelle. Single rotor wind turbines and multi-rotor wind turbines (which may have multiple nacelles) are known, but for the sake of efficiency, the following description refers primarily to single rotor designs. The rotor, in turn, includes a central hub and a plurality of blades extending radially therefrom and configured to interact with the wind to cause rotation of the rotor. The rotor is supported on the main shaft, which is either directly or indirectly operatively coupled with the generator which is housed inside the nacelle. Consequently, as wind forces the blades to rotate, electrical energy is produced by the generator. Wind power has seen significant growth over the last few decades, with many wind turbine installations being located both on land and offshore.

As noted above, blades interact with the wind to generate mechanical rotation of the rotor, which can then be converted into electrical energy. A wind turbine blade is a complex structure that must be constructed to withstand long-term service in an abusive environment, while also maximizing lift and minimizing drag forces. The blades move at varying speeds through the ambient environment surrounding the wind turbine, but often this movement is at high speed. Consequently, the blades will typically experience erosion and damage over time in operation as a result of friction from the air as well as potential impacts from rain, particulate matter, debris, or other items in the air, especially along the leading edge that is configured to face the direction of movement through the wind. The erosion or damage along the leading edge of the blade adversely affects the aerodynamic qualities of the blade over time, resulting in lower power production for given incoming wind speeds. Such erosion and damage on the blades can be corrected by routine maintenance and repair procedures.

The blades are typically formed from a shell of layered fiber composite, aluminum, or similar material with an outer skin defined by a series of layers of coatings (polymeric elastomers, paint, etc.) surrounding and covering an outer surface of the shell. The shell encloses internal components of the blade and isolates them from the environment, including shear webs and spar caps, for example. The outer skin may be defined by several different layers of material, including at least an outermost topcoat, a second layer underneath the outermost topcoat, and a third layer underneath the second layer. Other layers are typically present underneath the third layer as well, including base materials typically made from fiber composites and the like. Damage to the blade outer skin can be categorized into several different levels of severity based on which layer the damage extends to, e.g., an erosion to the third layer would be a "category 2" level of severity, which would be higher than a cut to the second layer, which would be a "category 1" level of severity. For low levels of damage or erosion, such damage can be repaired by depositing a coating onto the area to fill in the damage and restore the blade to the original condition along the leading edge thereof. One such repair by depositing material can be reviewed in PCT International Patent Publication No. WO2018/113875, owned by the original Applicant of the present application.

Although the '875 Publication referenced above provides one automated device for maintenance and repair, these types of repairs of the wind turbine blades have typically been conducted in three other manners conventionally. First, the blade can be disassembled from the remainder of the wind turbine and lowered to the ground for the repair to be completed. Such a repair process is time-consuming and costly as a result of needing to disassemble, move, and reassemble the blade relative to the top of the tower. Second, a human operator with rope access can rappel along the wind turbine blade while still attached to the rotor hub to evaluate and make repairs as needed to the blade. Once again, such a repair process is time-consuming and costly because of the need for experienced rope access technicians and the time needed to effect the repairs manually. Third, a repair action can be taken by an operator on a platform hoisted into position adjacent the blade on the wind turbine, either extending from the nacelle or hub of the wind turbine or extending from a cherry picker or boom-style lift. In all conventional methods, the wind turbine must be stopped and locked for the time period of repair, and as such, significant power production losses are experienced by wind turbine operators for these necessary maintenance and repair actions. This may lead some operators to delay or procrastinate in making such repairs, which can lead to more significant structural damage and even longer delays when more thorough repairs are necessary on the wind turbine blade. Furthermore, the repairs are still generally exposed to the local environmental conditions around the wind turbine blade, which can interfere with curing of repair coatings, for example.

Several devices are also known for isolating or enclosing a part of the wind turbine blade from the environment. Another known device for conducting maintenance of wind turbine blades is shown in PCT International Patent Publication No. WO2015/155507. The '507 Publication shows a temporary maintenance enclosure that surrounds all sides of a blade and includes a roof with an aperture through which the blade is received, so the blade is held in a vertical orientation for use with this temporary maintenance enclosure. Another solution is known from DE 202009002054 U1. A further known device for conducting maintenance or surface treatment of wind turbine blades is shown in U.S. Patent Publication No. 2019/0085828. The '828 Publication again shows that a wind turbine blade is surrounded by an extendible structure that expands upwardly from a truck to thereby surround the circumference of the blade that is held in a vertical orientation. Both of these further known devices are not configured for use with robotic maintenance devices that would need to operate with a wind turbine blade in a horizontal orientation, and as such, further improvements are desired for providing shielding or protection of blades having maintenance performed automatically or semi-autonomously while remaining secured to the wind turbine.

In recent years, a desire has emerged to allow for some more automated maintenance of wind turbine blades, to thereby improve the speed and/or precision of such a process. However, conventional automated maintenance devices are not always designed for reliable use on a wind turbine blade still connected to the rotor and hub of a wind turbine, and such systems are very slow in operation. Moreover, such automated maintenance devices have conventionally required operation without any cover or shielding being provided on the blade, which leaves the portion of the blade repaired by the maintenance device exposed to local environmental conditions. As a result, previously-developed automated options have not been widely adopted, as manual repair by rope access technicians has continued to be quicker and more efficient in many circumstances. Further improvements for maintenance and repair systems are therefore desired. Another maintenance device is known from US2019/338759 A1.

### Summary

To these and other ends, embodiments of the invention are directed to a robotic maintenance device for repairing damage around a leading edge of a wind turbine blade on a wind turbine. In this regard, the maintenance device includes a main chassis that is configured to be mounted on the wind turbine blade adjacent the leading edge. The main chassis includes a drive that operates to move the maintenance device along a longitudinal length of the blade. An applicator head is coupled to the main chassis at a first end thereof. The applicator head is configured to apply a coating material over an exterior surface of the blade at a position proximate the leading edge, such that the coating material fills in and covers up any damage. The maintenance device also includes an environmental control module coupled with the main chassis at the first end and proximate the applicator head. The environmental control module has a tent configured to be deployed to cover the leading edge of the wind turbine blade along a curing zone defined behind where the applicator head operates, such that the coating material in the curing zone can cure on the wind turbine blade while remaining shielded from local environmental conditions around the blade. With no requirement for a fixed interface to be provided/built on the blade for conducting the maintenance actions and repairs (e.g., the coating material is cured while shielded by the environmental control module so a more permanent fixed structure for such purposes is unnecessary), and no need for use of rope access technicians, the repair method of this embodiment achieves several technical advantages over known automated and semi-automated designs.

Several embodiments are now described in conjunction with the device(s) and method(s) of this invention, and it will be understood that each embodiment can stand on its own and/or be combined in any combination with the other method features/steps in the following embodiments.

In one embodiment, the tent of the environmental control module is selectively extendible and retractable between a collapsed position and an extended position. The tent defines a maximum longitudinal length in the extended position.

In another embodiment, the tent includes internal sheet material and external support framework collectively configured to enable extension and retraction of the tent. The external support framework provides a consistent cross-sectional shape for the tent and the internal sheet material is defined by a flexible cover that can expand or collapse between connection points with the external support framework. The flexible cover resists wind or water flows through the internal sheet material to protect the curing coating material from the local environmental conditions like wind and rain.

In a further embodiment, a pressurized air source is included at the environmental control module. The air source delivers an air flow to provide a pneumatic force to actuate at least one of extension and retraction of the tent between the collapsed and extended positions. The air flow may also maintain the tent in an extended position, for example, during use on the blade.

In another embodiment, the tent defines an elongated V-shaped structure when deployed. This V-shaped structure is generally aligned with and covers the leading edge of the wind turbine blade and parts of opposing sidewalls extending from the leading edge. Thus, all surfaces receiving a coating material during repair actions are covered by the tent.

In yet another embodiment, the tent includes a first longitudinal end connected to a remainder of the environmental control module and facing towards the main chassis and the applicator head. The tent also includes a second longitudinal end opposite the first longitudinal end, so as to define a free end of the tent. The second longitudinal end carries a securing element that is configured to fix the second longitudinal end of the tent in position on an exterior surface of the wind turbine blade to thereby hold that end in position.

In such an embodiment, the tent generally remains spaced apart from the exterior surface of the blade except at an engagement of the securing element to the blade. As a result, the coating material in this region can cure without contact or interference from the tent.

In a further embodiment, after engaging the securing element of the tent with the blade, the tent is extended from the collapsed position by moving the first longitudinal end with the robotic maintenance device away from the second longitudinal end. To this end, as the drive moves the main chassis and applicator head over a working length of the leading edge of the blade, the tent extends as the first longitudinal end follows the movement and moves away from the secured second longitudinal end.

In embodiments including the securing element, the maximum longitudinal length of the tent in the extended position is at least as long as the working length defined by where repair actions are made on the blade. As a result, an entirety of the working length is covered by the tent when the tent is in the extended position in such embodiments.

In an alternative embodiment, after the tent is deployed, the tent extends linearly away from the environmental control module over a tent length defined between the first and second longitudinal ends of the tent. The tent defines a rigid shape that then extends generally parallel to the blade along the tent length. This positions the tent spaced apart from and above the exterior surface of the wind turbine blade along an entirety of the tent length.

In one such embodiment, after deploying the tent, the tent remains extended and in the rigid shape to cover the curing zone. The tent and the curing zone move along with the robotic maintenance device as a result, while the drive moves the main chassis and applicator head along a working length of the leading edge of the blade.

In another embodiment, the tent length is selected to define a length of the curing zone that will allow for curing of the coating material based on a movement speed of the drive and main chassis along the blade as well as a curing time period necessary for the coating material. In this regard, as the tent remains extended and moves over the blade leading edge, a portion of the tent remains above the curing coating as long as necessary for the curing to complete before such coating is exposed again to the local environmental conditions around the wind turbine blade. In each embodiment of the robotic maintenance device, the environmental control module allows for the newly-applied coating to cure while being shielded from rain, wind, and the like.

Embodiments of the present invention are also directed to an environmental control module that is configured to be mounted on a robotic maintenance device according to the invention for repairing damage around a leading edge of a wind turbine blade. The environmental control module includes a tent that is extendible and retractable between a collapsed position and an extended position. In the extended position, the tent extends along a tent length away from the robotic maintenance device to cover the leading edge of the blade along a curing zone defined behind where the maintenance device applies a coating material to the blade. The coating material in the curing zone can therefore cure on the blade while remaining shielded from local environmental conditions around the wind turbine blade.

In one embodiment, the tent defines an elongated V-shaped structure when deployed. This structure is generally aligned with and covers the leading edge of the wind turbine blade and parts of opposing blade sidewalls extending from the leading edge of the blade. It will be understood that many other features as described in embodiments of the maintenance device above can be applied in embodiments of the environmental control module of this invention.

Embodiments of the invention are also directed to a method for repairing damage around a leading edge of a wind turbine blade on a wind turbine. The method includes operating the wind turbine to move one of the blades to a generally horizontal orientation, with the blade pitched in that generally horizontal orientation such that the leading edge of the blade is oriented to face vertically upward. The method further includes providing a robotic maintenance device onto the wind turbine blade. The maintenance device includes a main chassis, an applicator head configured to apply a coating material over an exterior surface of the blade, and an environmental control module having a tent. The robotic maintenance device then performs repair actions by applying the coating material proximate the leading edge as the maintenance device moves along a length of the blade. The method also includes deploying the tent such that the tent covers the leading edge of the wind turbine blade along a curing zone defined behind where the applicator head operates. This curing zone allows the coating material therein to cure on the blade while remaining shielded from local environmental conditions on the blade.

In one embodiment, deploying the tent further includes extending the tent from a collapsed position to an extended position to cover the curing zone as the maintenance device performs repair actions. The tent is then retracted back to the collapsed position, which is adjacent the robotic maintenance device, and specifically after the maintenance device performs repair actions and after the coating material has cured on the blade.

In another embodiment, the environmental control module includes a pressurized air source. The method then includes delivering an air flow with the pressurized air source to provide a pneumatic force to the tent to actuate at least one of extension and retraction of the tent between the collapsed and extended positions.

In a further embodiment, the tent defines an elongated V-shaped structure when deployed that is generally aligned with and covers the leading edge of the wind turbine blade and opposing sidewalls extending from the leading edge of the blade.

In yet another embodiment, the tent includes a first longitudinal end connected to a remainder of the environmental control module and a second longitudinal end opposite the first end and having a securing element. The method then includes affixing the second longitudinal end of the tent in position on the exterior surface of the blade by engaging the securing element with the blade. The first longitudinal end of the tent is moved away from the second longitudinal end as the robotic maintenance device moves along a working length of the leading edge of the blade, thereby deploying and extending the tent to expand the curing zone under the tent as the maintenance device moves. The tent then remains spaced apart from the exterior surface of the blade except at the engagement of the securing element to the blade.

In an alternative embodiment, the tent includes a first longitudinal end connected to a remainder of the environmental control module and a second longitudinal end opposite the first end. The method then includes extending the tent by deploying the tent form the environmental control module such that the tent extends linearly away from the control module to define a rigid shape that extends generally parallel to the blade over a tent length defined between the first and second longitudinal ends. The tent is maintained in an extended state while the maintenance device moves along a working length of the leading edge of the blade. The tent therefore remains spaced apart from and above the exterior surface of the wind turbine blade along an entirety of the tent length, with the curing zone being located under the tent length and the curing zone moving with movements of the robotic maintenance device.

The steps and elements described herein can be reconfigured and combined in many different combinations to achieve the desired technical effects in different styles of wind turbines, as may be needed in the art.

### Brief Description of the Drawings

The accompanying drawings, which are incorporated in and constitute a part of this specification, illustrate one or more embodiments of the invention and, together with a general description of the invention given above, and the detailed description given below, serve to explain the invention.

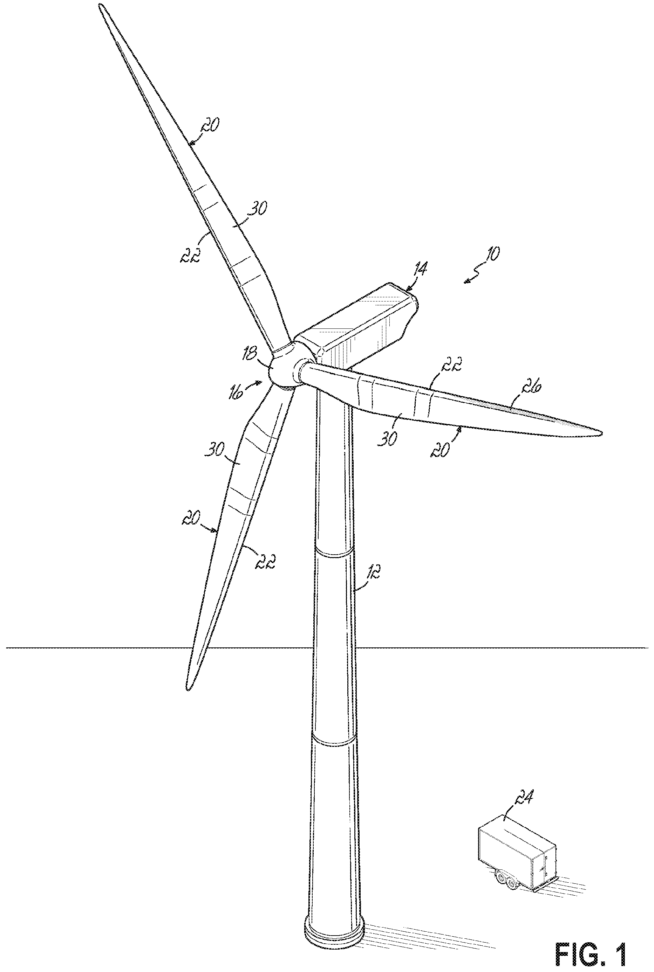

Fig. 1 is a perspective view of a wind turbine according to one embodiment of the invention.

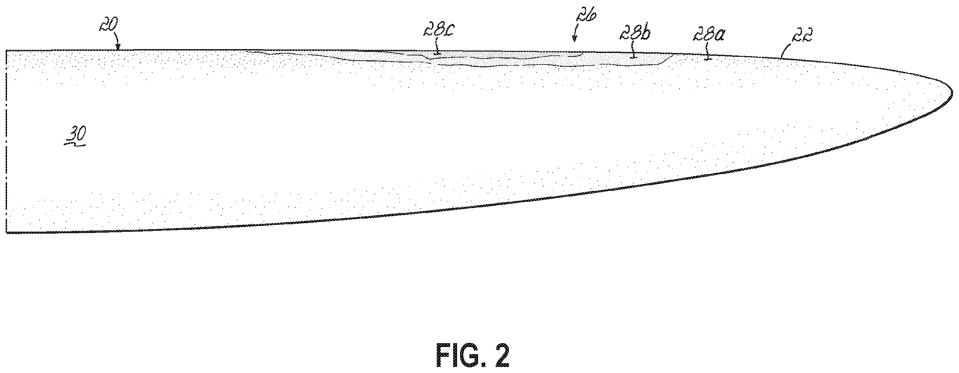

Fig. 2 is a front view of a wind turbine blade of the wind turbine of Fig. 1, showing various levels of erosion-type damage along a leading edge that is pitched upwardly.

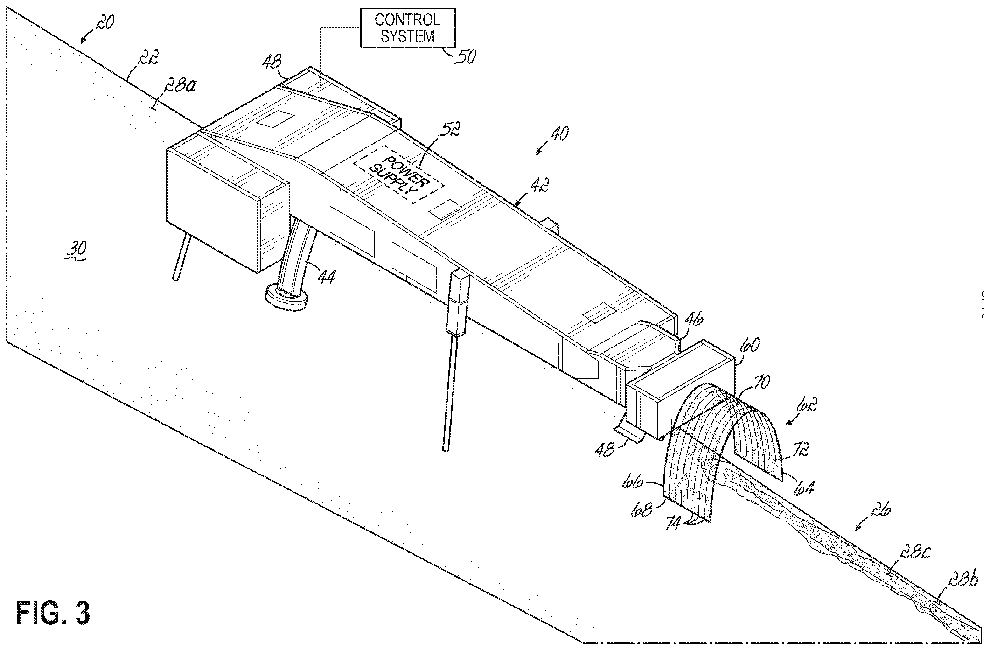

Fig. 3 is a top perspective view of a robotic maintenance device in accordance with embodiments of the present invention, mounted in position on the leading edge of the wind turbine blade of Fig. 2 with an applicator tool positioned to move over the exterior surface of the wind turbine blade to apply a coating to repair the damage and an environmental control module for shielding the applied coating from local environmental conditions at the blade.

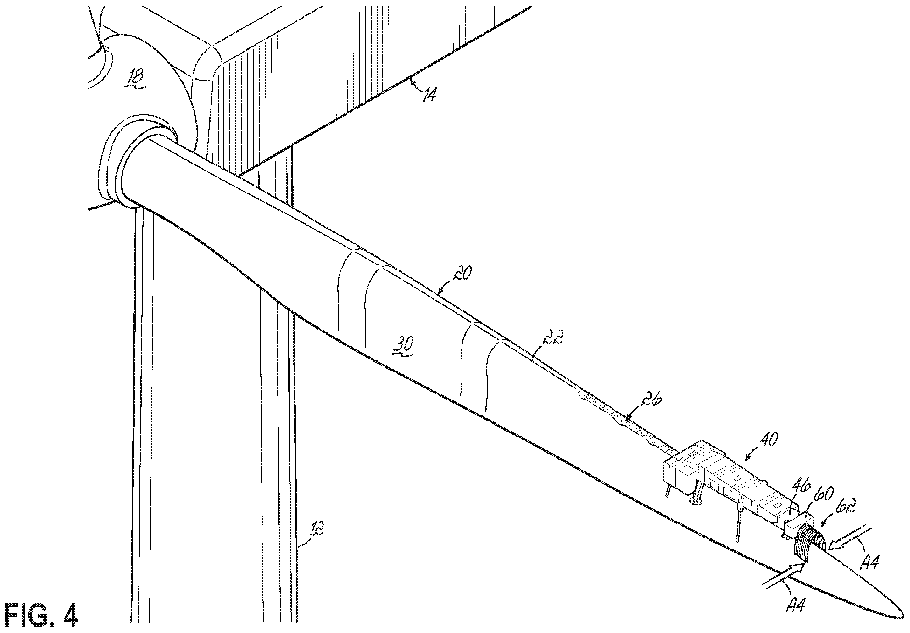

Fig. 4 is a top perspective view of one embodiment of the robotic maintenance device of the present invention in a first operational state in which the maintenance device is mounted on the leading edge of the blade and a tent of the environmental control module is being secured at a second/free longitudinal end thereof to the exterior surface of the blade.

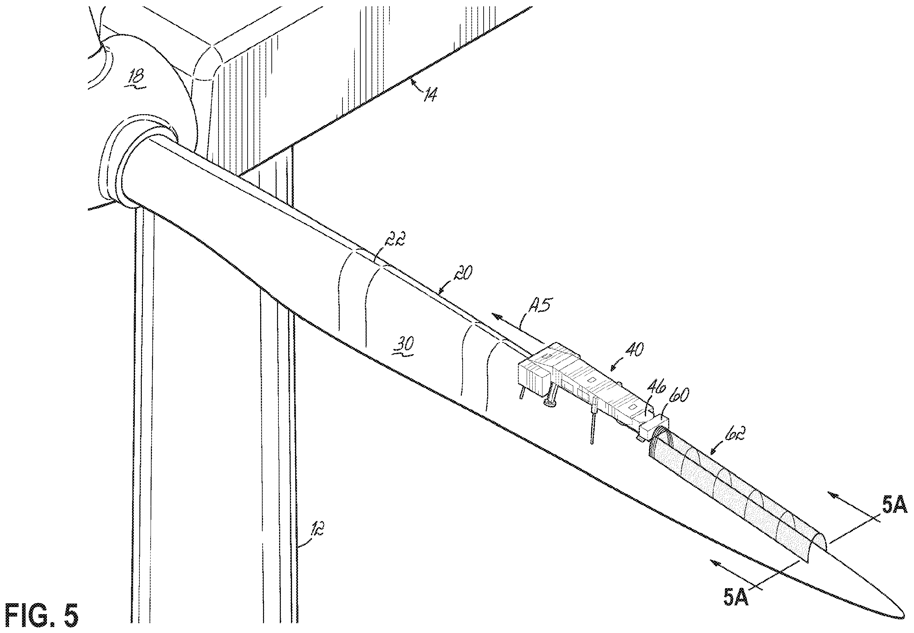

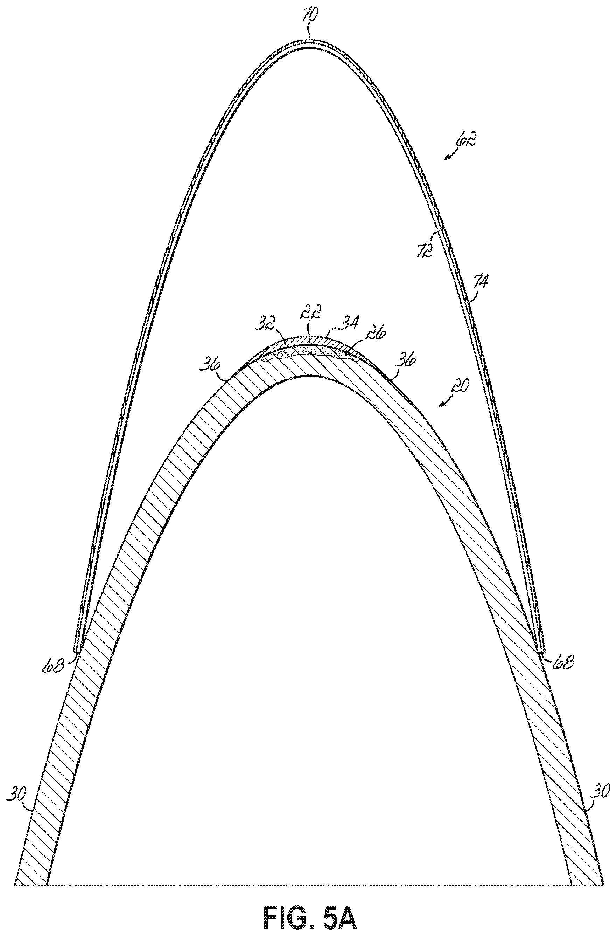

Fig 5 is a perspective view similar to Fig, 4 and showing a further operational state in which the robotic maintenance device is moving along a working length of the blade and applying coating to the blade, which also moves a first longitudinal end of the tent away from the second longitudinal end to cause extension of the tent from a collapsed position.
Fig. 5A is a cross-sectional view of the wind turbine blade and tent of Fig. 5, taken along line 5A-5A in Fig. 5, showing the configuration of these elements at the second longitudinal end of the tent, as well as the shaped coating applied to repair the damage on the blade.

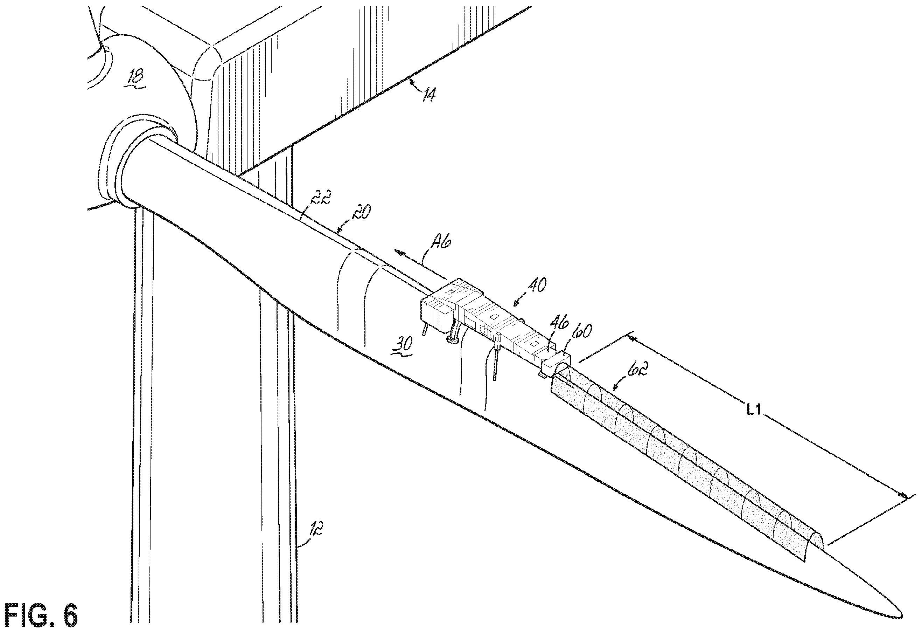

Fig. 6 is a perspective view similar to Fig. 5 and showing a further operational state in which the robotic maintenance device has continued to move to perform repair actions on the leading edge of the blade, with the tent reaching full extension over a curing zone as a result of movement of the maintenance device.

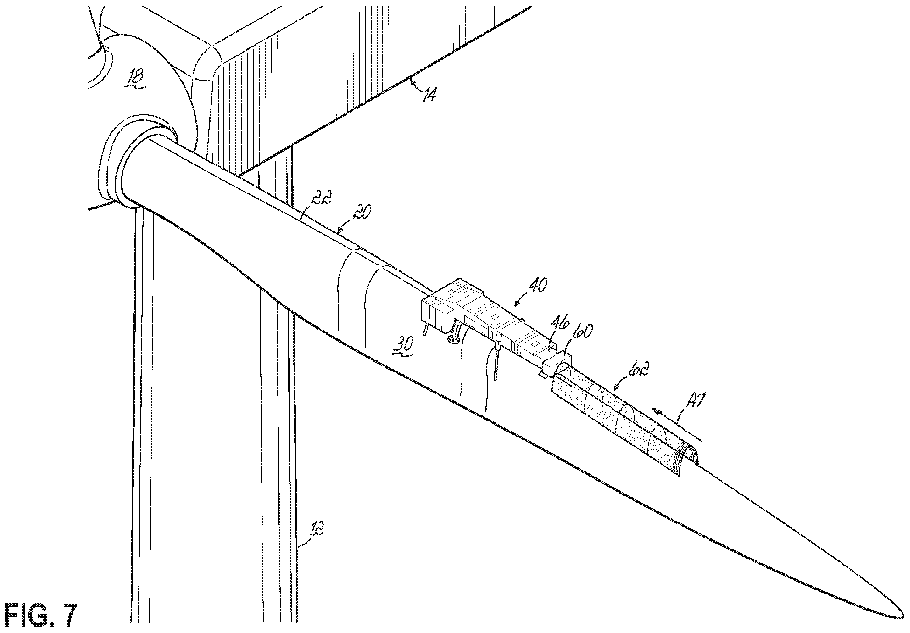

Fig. 7 is a perspective view similar to Fig. 6 and showing a subsequent operational state in which the second longitudinal end of the tent is being moved back towards the first longitudinal end to retract the tent back towards the collapsed position.

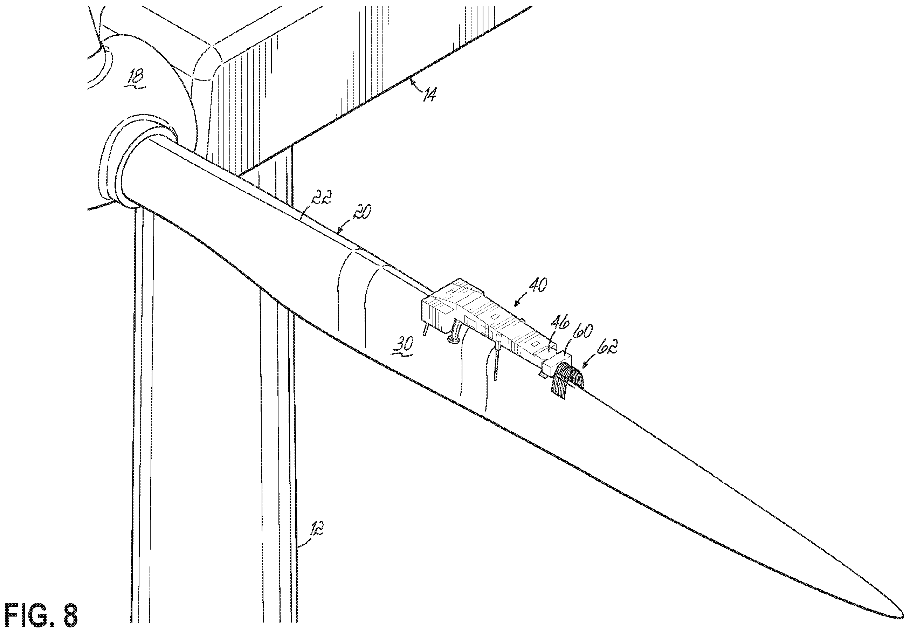

Fig. 8 is a perspective view similar to Fig. 7 and showing a subsequent operational state in which the tent has been fully retracted and returned to the collapsed position, at the completion of the repairs, thereby putting the maintenance device in position to be retrieved back off of the wind turbine blade.

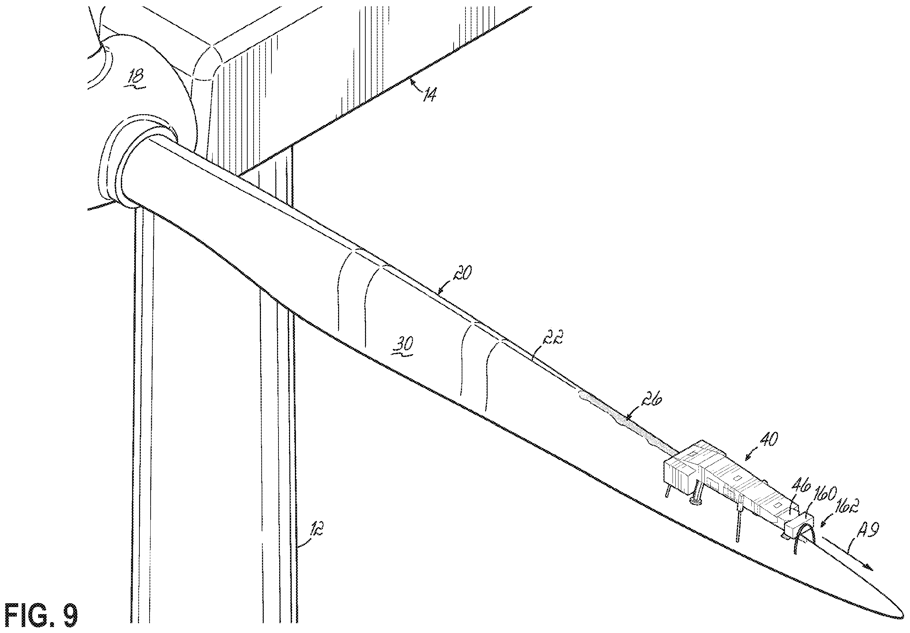

Fig. 9 is a top perspective view of another embodiment of the robotic maintenance device of the present invention in a first operational state in which the maintenance device is mounted on the leading edge of the blade and a tent of the environmental control module is initially held in a collapsed position next to the maintenance device.

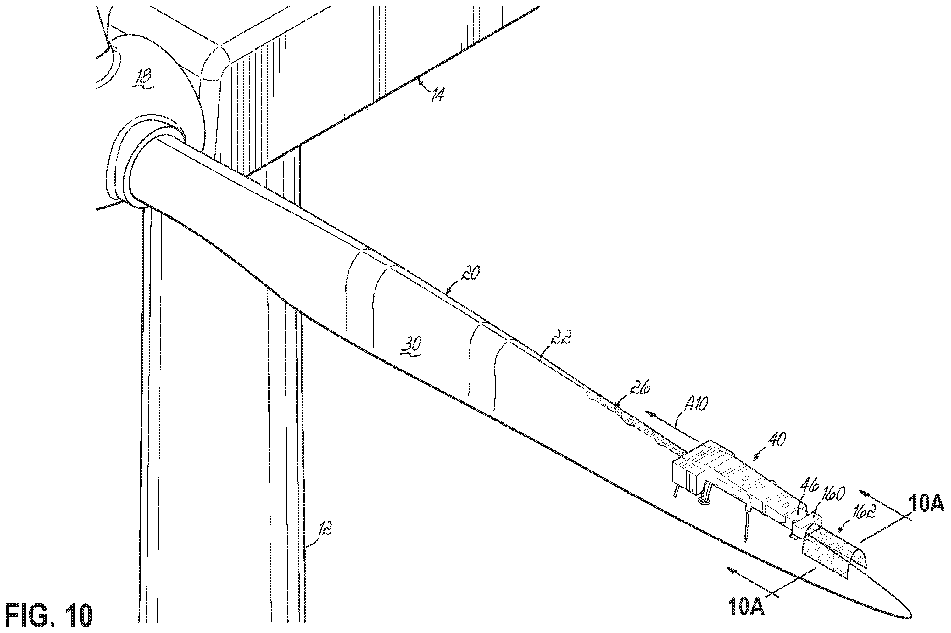

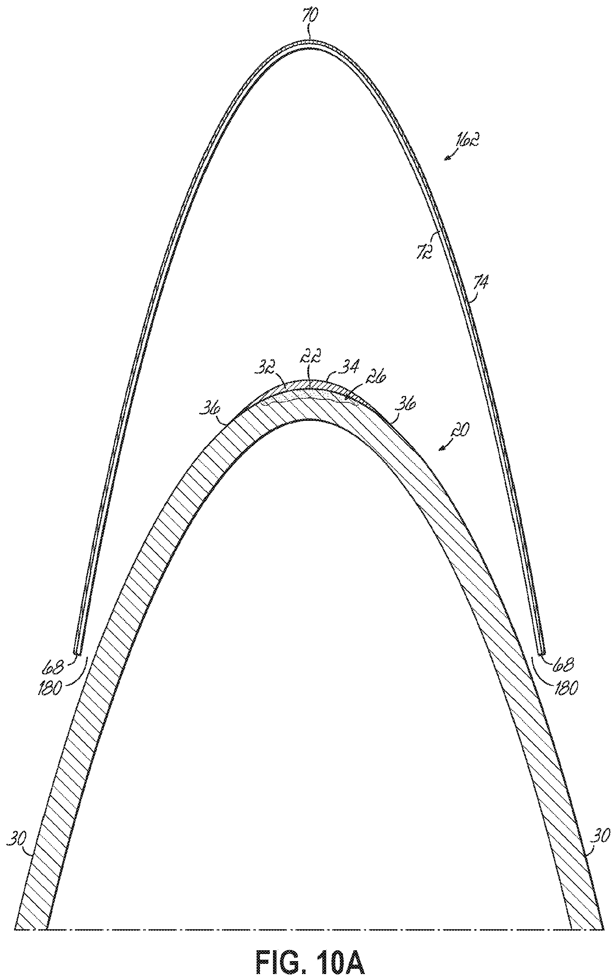

Fig. 10 is a perspective view similar to Fig. 9 and showing a subsequent operational state in which the tent has been extended generally linearly from the environmental control module to a fully extended state for covering a curing zone defined behind the operations of the maintenance device.
Fig. 10A is a cross-sectional view of the wind turbine blade and tent of Fig. 10, taken along line 10A-10A in Fig. 10, showing the configuration of these elements near a second longitudinal end of the tent, as well as the shaped coating applied to repair the damage on the blade.

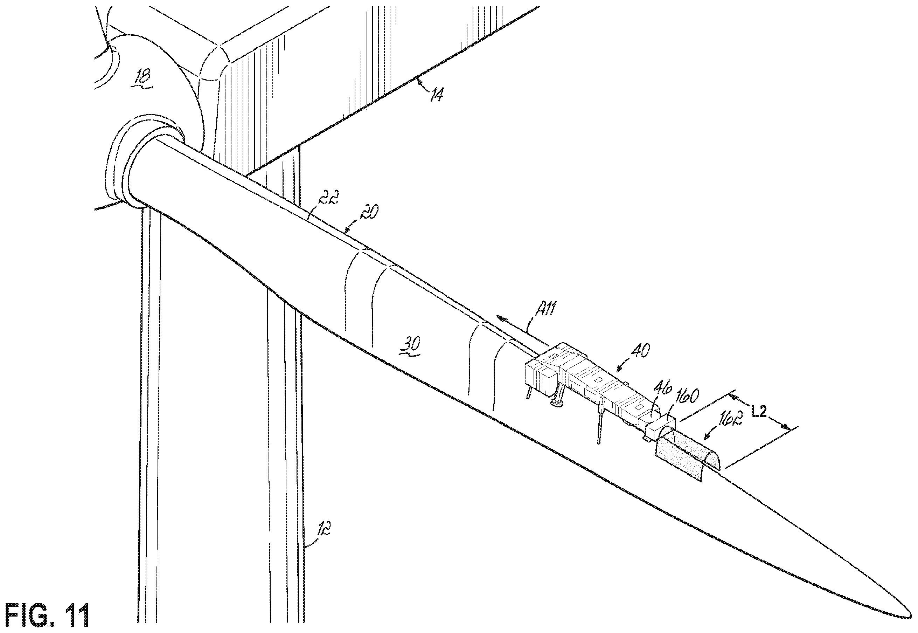

Fig. 11 is a perspective view similar to Fig. 10 and showing a subsequent operational state in which the robotic maintenance device is moving along a working length of the blade to perform repair actions, and the fully-extended tent is following behind the maintenance device to cover a curing zone that also moves as the maintenance device moves along the blade.

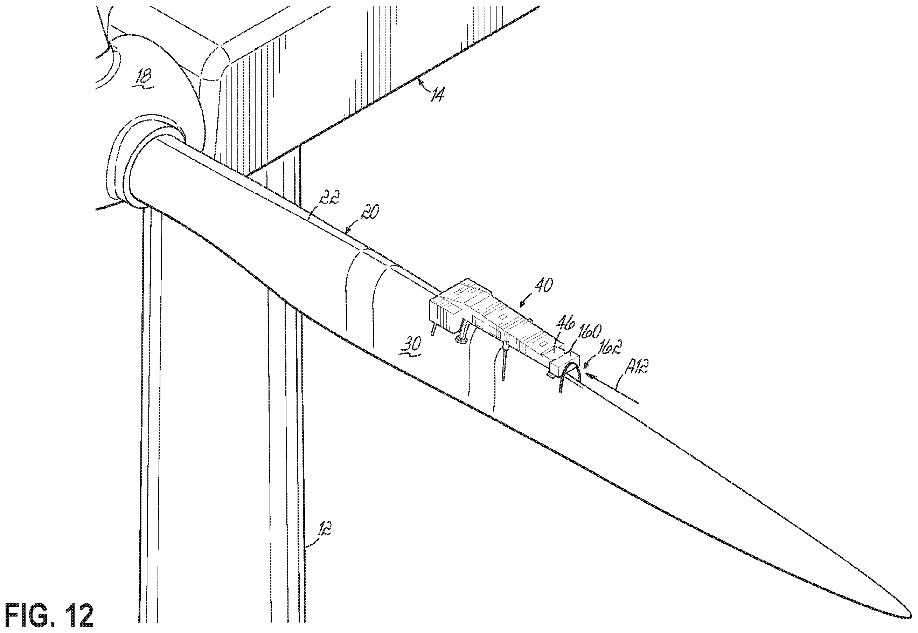

Fig. 12 is a perspective view similar to Fig. 11 and showing a subsequent operational state in which the tent has been fully retracted and returned to the collapsed position, at the completion of the repairs, thereby putting the maintenance device in position to be retrieved back off of the wind turbine blade.

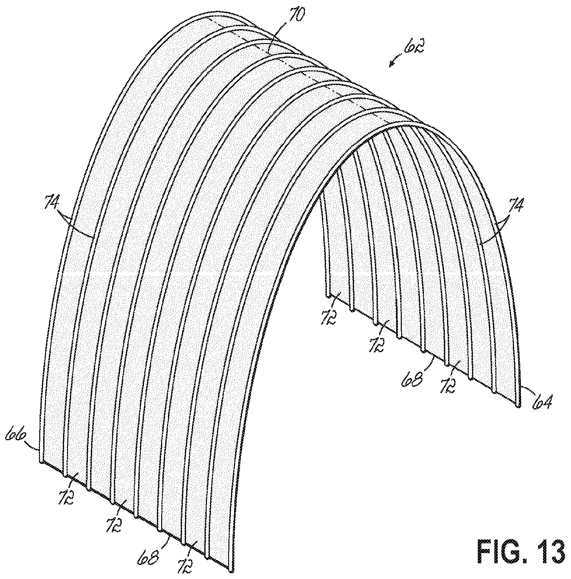

Fig. 13 is a top perspective view of one embodiment of the tent of the environmental control module of the present invention showing further constructional details thereof.

### Detailed Description

With reference to Figs. 1 through 13, embodiments of a robotic maintenance device and a method for automatically repairing damage around a leading edge of a wind turbine blade are shown in detail. The robotic maintenance device includes an applicator head for applying a coating material to the wind turbine blade to cover up and fill in damaged areas proximate the leading edge of the blade, and also includes an environmental control module with a tent that can extend to cover a curing zone where the coating material applied by the maintenance device is solidifying and curing in position around the leading edge of the blade. The tent can have several different implementations as set forth below, but in any of these implementations, the tent covers the leading edge and portions of opposing sidewalls on opposite sides of the leading edge to thereby shield those surfaces and any coating material applied thereto from local environmental conditions such as rain and wind that could otherwise adversely affect the curing process. Providing the environmental control module in the maintenance device and method helps produce a high quality repair with minimal time, once again helping minimize operational downtime of the wind turbine for such repairs, while also avoiding the need for rope access technicians and the associated safety and timing problems of manual repairs, or the need for more permanent fixed structures for surrounding or covering the blade during maintenance operations. Other advantages and effects of the embodiments of this invention will be evident from the following description.

Throughout this application, the correction of erosion damage on wind turbine blades is typically referred to throughout as a "repair" of those damages. In some contexts, "damage" refers to more significant damages to the blade (perhaps beyond what is described as "category-1" and "category-2" damage herein), and so the operation of the maintenance device may be deemed a routine maintenance action that occurs before a blade is "damaged" in such contexts. In this regard, it will be understood that within the context of this application, the maintenance device is capable of providing preventative maintenance to remove wear and erosion effects before such effects cause "damage" that must be repaired on the wind turbine blade, and the maintenance device is also capable of providing more thorough repairs after damage is caused on the blade.

Turning with reference to Fig. 1, a wind turbine 10 is shown to include a tower 12, a nacelle 14 disposed at the apex of the tower 12, and a rotor 16 operatively coupled to a generator (not shown) housed inside the nacelle 14. The rotor 16 of the wind turbine 10 includes a central hub 18 and a plurality of wind turbine blades 20 that project outwardly from the central hub 18 at locations circumferentially distributed around the hub 18. As shown, the rotor 16 includes three wind turbine blades 20, but the number of blades 20 may vary from one wind turbine to another. The wind turbine blades 20 are configured to interact with air flow to produce lift that causes the rotor 16 to spin generally within a plane defined by the wind turbine blades 20. As the rotor 16 spins, the wind turbine blades 20 pass through the air with a leading edge 22 leading the respective wind turbine blade 20 during rotation. As schematically evidenced by a transport container 24 shown along a ground surface at the bottom of the tower 12, the wind turbine blades 20 in use are spaced apart from the ground surface by a significant distance, which normally renders maintenance and repair actions difficult. However, the repair system of this invention improves the repair process to make automated or semi-automated repairs with the robotic maintenance device more effective and reliable, as will be set forth in detail below.

The transport container 24 shown in Fig. 1 may be used to move the robotic maintenance device to the location of a wind turbine 10 requiring repair actions on one or more of its blades 20. Alternatively, the robotic maintenance device may be transported or delivered by other methods for use on a wind turbine 10, as will be readily understood in the art. The wind turbine 10 then advantageously only needs to be in downtime when the maintenance device is actually moved to and mounted on the blade 20 as described in further detail below. In any event, such transport is not the focus of the present invention and thus will not be described in further detail herein.

As the wind turbine 10 ages, one or more of the wind turbine blades 20 may experience erosion from prolonged, continuous exposure to the environment. One example of such erosion damage 26 is shown in Fig. 1 and better shown in the detailed view of Fig. 2. While not being particularly limited to any source, erosion damage 26 may occur due to particulates in the air that abrade the leading edge 22 of the wind turbine blade 20 during operation. Erosion therefore may occur in an erosion zone that includes the leading edge 22, but it may also occur in other areas in the exterior surface 30 of the blade 20. Accordingly, while the robotic maintenance device is configured to repair damage and move along the leading edge 22, this device is also capable of conducting maintenance and repair actions anywhere along the outer surface of the blades 20.

Erosion damage 26 in the context of this application is generally characterized as a loss of material from the wind turbine blade 20. Material loss may be uniformly distributed but is often non-uniform across the leading edge 22 or any other surface of the wind turbine blade 20. Rather than losing a uniform skin of material from a surface, erosion may include localized surface imperfections, such as random pitting and shallow gouges or crack-like features that may be a result of localized, connected pitting (as a result of impacts with debris or other matter in the environment). In any case, if erosion damage 26 is not repaired in a timely fashion, the wind turbine blade 20 becomes less efficient at rotating the rotor 16 and ultimately, the structural integrity of the wind turbine blade 20 may be significantly impaired. With reference to the detailed view in Fig. 2, it will be understood that the erosion damage 26 may define differing levels of severity based on how deep the damage extends inwardly into the material layers defining the outer shell of the blade 20. In the example shown, the erosion damage 26 includes some areas with an erosion or cut of material through the outer topcoat layer into a second layer of material underneath the topcoat, which is categorized as a "category 1" level of severity, and further areas with an erosion or cut of material through the outer topcoat layer and the second later of material into a third layer of material underneath the second layer, which is categorized as a "category 2" level of severity. For reference, deeper cuts and erosions defining more significant damage is typically categorized at higher levels such as category 3, 4, or 5. In Fig. 2, the topcoat is shown at 28a, the revealed areas of second layer are shown at 28b, and the revealed areas of third layer are shown at 28c. These various layers 28a, 28b, 28c of material may optionally be different in color, which can help with the identification of damage severity and repair confirmation after the repair is completed with the maintenance device. By identifying and correcting so-called lower levels of erosion damage 26 promptly by maintenance-style "repair actions," more significant damage of the blade 20 can be avoided along with higher operational downtime caused by the more significant damage.

Fig. 3 provides an overview of one exemplary robotic maintenance device 40 that may be used with repair systems and methods in accordance with embodiments of this invention. The robotic maintenance device 40 is shown in an operation position in this view for conducting repair/maintenance actions on the wind turbine blade 20. The maintenance device 40 includes a main chassis 42 (may also be referred to as a main body) having one or more support elements 44 such as wheels or the like extending towards opposite sides of the leading edge 22 of the blade 20 when the maintenance device 40 is mounted atop the leading edge 22 of the blade 20 as shown in this Figure. The support elements 44 may interact with or define part of a drive that can move the maintenance device 40 along the blade 20. The maintenance device 40 further includes an applicator head 46 mounted on the main chassis 42 and configured to apply a coating material over the exterior surface 30 of the blade 20. Although the applicator head 46 is shown in this Figure to include a spatula-type device 48 for spreading and forming the coating material into a shaped coating that fills in and covers up any damage, it will be understood that alternative types of applicator tools and heads may be provided in other embodiments without departing from the scope of the invention.

Although not shown in this Figure, the maintenance device 40 typically also includes a sander tool that can be moved along the exterior surface 30 at and adjacent damaged areas to abrade such surfaces and prepare same for receipt of the coating material. The maintenance device 40 further includes a control system 50 that operates each of these elements as well as any further devices, tools, or modules installed on the maintenance device 40. The maintenance device 40 is therefore configured to perform repair actions as it moves along a longitudinal length of the leading edge 22 of the blade 20. Additionally, a power supply 52 such as a battery pack may be mounted on the maintenance device 40 for providing operating power to the various elements of the maintenance device 40 or other connected devices and equipment, the power supply 52 being shown schematically in Fig. 3. Further details of the maintenance device 40 will be discussed below where pertinent to the new aspects of the repair system and method provided herein.

The robotic maintenance device 40 also includes an environmental control module 60 in accordance with the aspects of the present invention. The environmental control module 60 is shown generically in Fig. 3 but two alternative embodiments will be described in detail with reference to the Figures described below with corresponding explanations of operational methods using the environmental control module 60. The environmental control module 60 includes a tent 62 that is shown in a collapsed position or a fully-retracted state in Fig. 3, which positions the tent 62 fully adjacent to the remainder of the maintenance device 40. The tent 62 is shown generally schematically in all the following views but will be described in connection with one example embodiment in the structural description provided with reference to Fig. 13 below. The environmental control module 60 is mounted on a distal end of the maintenance device 40 and beyond the position of the applicator head 46 because the tent 62 should be positioned to cover the coating material applied essentially immediately after that coating material is applied. For example, the environmental control module 60 can be mounted on the free end of the applicator head 46 or could be otherwise mounted on the main chassis 42 so as to be positioned in front of the applicator head 46. The tent 62 when extended is configured to cover and protect the still-curing coating material within a curing zone defined underneath the tent 62. By shielding this coating material from external environment interference such as rain or wind gusts, the shaped coating can cure within a curing time and reliably remain bonded with the remainder of the wind turbine blade 20 for future operations. It will be understood that the environmental control module 60 is provided as a separate, independent module for attachment to the robotic maintenance device 40 when use of the tent 62 is necessary or desired, and the module 60 can be removed when such use is not needed or desired.

Figs. 4-8 illustrate one embodiment of the environmental control module 60 shown in operational use on a robotic maintenance device 40 that has been mounted to the leading edge 22 of a wind turbine blade 20 that remains connected to the wind turbine 10 and is held generally horizontal in orientation with the leading edge 22 pitched to face vertically upward. In this position, the wind turbine blade 20 is properly positioned to receive the maintenance device 40 with the support elements 44 extending from the main chassis 42 into contact with opposing surfaces of the blade 20 on different sides of the leading edge 22. As also shown in this view, the types of erosion damage 26 that are typically repaired with the maintenance device 40 as described herein will typically be located in about an outer third (1/3) of the longitudinal length of the blade 20. For a wind turbine blade 20 defining a longitudinal length or span of about 60 meters, the working length over which erosion damage 26 will be repaired can be up to about 20 meters in length. It will be understood that larger and longer blades 20 will define corresponding longer working lengths for repair actions. Regardless, for the purposes of the examples provided in this application, a 20-meter working length of damage 26 will be assumed to be what the robotic maintenance device 40 works on while mounted on the blade 20.

With reference first briefly to Fig. 5A, the shaped coating 32 that is applied (also referred to generally as the coating material 32) is shown on the leading edge 22 of the wind turbine blade 20 in this cross-sectional view. The coating material 32 is shaped by the applicator head 46 and specifically by the spatula 48 to define a smooth, continuous outer surface 34 around the leading edge 22. To do this, the shaped coating 32 is generally thickest around the leading edge 22 and then tapers in thickness to zero at the sidewalls of the blade 20 along so-called first and second chamfer lines 36. In embodiments where the repair process includes a step of sanding or abrading the blade surface to prepare for receiving the coating material 32, the coating 32 may be shaped so as to position the first and second chamfer lines 36 at the edges of the sanding to assure that the shaped coating 32 can form a reliable bond at all locations where it is applied to the blade 20. The tapering of the shaped coating 32 allows for the outer surface 34 of the coating 32 to transition and merge smoothly into the existing exterior surface 30 of the blade 20 located on the sidewalls below where the shaped coating 32 is applied. The aerodynamic profile and properties of the blade 20 are therefore established again once the shaped coating 32 is applied and cured in position as shown in this Fig. 5A. As such, it is desirable to protect the coating 32 during curing to avoid losing the desirable aerodynamic profile at the outer surface 34 thereof.

In one particular example, the coating material 32 applied to cover up and fill in the damaged areas 26 is a two-component mixture that is mixed immediately before being dispensed and spread over the surface of the wind turbine blade 20. For example, the coating material 32 may be defined by an epoxy or a polyurethane coating, but other repair filler materials and/or protective coatings can be used as well. Once mixed and applied, the exemplary coating material 32 cures in regular ambient temperatures in approximately 80 seconds. Therefore, the tent 62 of the environmental control module 60 is configured to cover the coating material 32 for at least this standard curing time of the material chosen, which of course may vary in other embodiments consistent with the scope of this invention. To this end, the curing zone defined by the tent 62 is large enough when extended to define a curing zone that will remain protected from the external environment for at least the curing time (generally with additional time as well for assuring the cure is completed, e.g., coverage and shielding for at least 2 to 3 minutes for an 80 second cure time.

Now returning with reference to Fig. 3, a first operational state of one embodiment of a method for repairing leading edge damage on the wind turbine blade 20 is shown. The robotic maintenance device 40, which includes the applicator head 46 and the environmental control module 60 as initially described above, is mounted in position on the wind turbine blade 20 near a tip end thereof. In this position, the applicator head 46 is positioned along one end of a working length where the coating 32 is to be applied to the leading edge 22. The damage 26 can be seen extending along the leading edge 22 behind the initial position of the maintenance device 40 because the maintenance device 40 will be moved by its drive rearwardly or towards the root end of the blade 20 during the repair process, which is shown in the following Figures as well. In a preferred embodiment, the repair can be completed with only one longitudinal pass of the maintenance device 40 over the working length of the blade 20.

In this state, the tent 62 of this embodiment is also in position to be secured to the exterior surface 30 of blade 20. As shown in Fig. 3, the tent 62 is in the collapsed position and is therefore fully retracted such that a second (free) longitudinal end 64 of the tent 62 is as close to the first longitudinal end 66 of the tent 62 as possible, the first longitudinal end 66 being the end connected to the remainder of the environmental control module 60 and therefore facing towards the maintenance device 40. The second longitudinal end 64 in this embodiment carries a securing element (not shown in detail) configured to fix the tent 62 in position at the second longitudinal end 64 to the exterior surface 30 of the blade 20. The securing element engages with the blade 20 as shown by clamping movement arrows A4 in Fig. 4. The securing element will be understood to be any known device or element that is configured to hold the tent 62 or another structure in position on a surface of the wind turbine blade 20. Such securing elements may include claw-like grippers, suction cup-like elements, and the like, for example. The securing element is also configured to be selectively released when the repair method is completed, which will also be understood from these examples and others known in the art for such securing functionality. With the second longitudinal end 64 of the tent 62 secured in position, the robotic maintenance device 40 is then ready to proceed with movement and application of the coating material 32 onto the blade 20.

Then as shown in Fig. 5, the tent 62 is extended by moving the robotic maintenance device 40 as shown by movement arrow A5 towards the root end of the blade 20, which is also when the applicator head 46 conducts repair actions on and about the leading edge 22. The second longitudinal end 64 remains fixed in position with the securing element and so these movements cause the first longitudinal end 66 to move away from the second longitudinal end 64, and the tent 62 is thereby forced to extend in length between these diverging points. The tent 62 angles upwardly from the securement at the second longitudinal end 64 and thus is generally not in contact with the surface of the blade 20 in this embodiment at any point except at the second longitudinal end 64 and at the lower ends 68. However, as will be shown in Fig. 5A, the engagement is designed to be limited to areas where the coating 32 is not applied. In any event, the tent 62 as deployed or extended defines an elongated V-shaped structure that is generally aligned with but spaced apart from the leading edge 22 and portions of the blade sidewalls extending on opposite sides of the leading edge 22. As can be seen in Fig. 5 and also in Fig. 5A, as the tent 62 is deployed it automatically covers a curing zone where the maintenance device 40 has performed repair actions on the blade 20. This covering advantageously prevents rain and/or wind from effecting the curing process while also potentially controlling in some aspect the local humidity and temperature in the curing zone as well.

Turning now to Fig. 5A, the elongated V-shaped structure of the tent 62 is shown in further detail to illustrate how the tent 62 covers the blade 20 along the curing zone. As initially described above, the second longitudinal end 64 of the tent 62 engages at the lower ends 68 of the V-shaped structure with the exterior surface 30 of the blade 20 along the sidewalls thereof. This engagement, which is with the securing element, is located on the sidewalls below or farther away from the leading edge 22 than where the coating 32 terminates at the first and second chamfer lines 36. Thus, even at the second longitudinal end 64, the tent 62 is spaced apart from all of the shaped coating 32. It will be understood that other embodiments of the maintenance device 40 may have the lower ends 68 of the V-shaped structure of the tent 62 placed adjacent to or in contact with the exterior surfaces 30 of the blade 20 at further locations beyond the second longitudinal end 64, but such contact points will still remain spaced apart from the shaped coating 32 along the curing zone. It will be readily understood from the cross-section of Fig. 5A how the coverage of the curing zone with the tent 62 prevents wind and rain from significantly effecting the cure process occurring on the leading edge 22 of the blade 20. As such, a high-quality bond and repair can be better assured when deploying the tent 62 from the environmental control module 60 in this manner.

The structure of the tent 62 is better visible in this cross-section of Fig. 5A as well. To this end, the V-shaped structure defined by the tent 62 includes the lower free ends 68 as noted above, which face downwardly towards the blade 20, and the tent bows upwardly on both sides to a top apex 70 of the V-shaped structure. This top apex 70 is generally aligned with and positioned above the leading edge 22 of blade 20. These elements of the V-shaped structure remain in these positions regardless of whether the tent 62 is in the collapsed position or an extended position. Although described further below with reference to Fig, 13, the general construction of the tent 62 is shown in Fig. 5A as well, this construction being defined by an internal sheet material 72 and external support framework 74. The internal sheet material 72 is a flexible cover that can expand or collapse between connection points with the external support framework 74, and the external support framework 74 defines and maintains the V-shaped structure or profile of the tent 62 along the length thereof. More details regarding these elements is provided below, and it will be understood that other types of tent/cover constructions may be used for providing the coverage over the curing zone.

Fig. 6 illustrates a further step of the repair method, where the robotic maintenance device 40 has continued to move to the end of the working length where repair actions need to be conducted by applying the coating material 32 to the leading edge 22 of the blade 20. This movement of the maintenance device 40 is along the direction of arrow A6 in this view, although the maintenance device 40 is shown effectively at the end of this movement along the working length. The tent 62 has thus continued to be extended or deployed to an extended position to cover an entire working length on the blade 20. To this end, Fig. 6 shows the full extension length L1, also referred to a maximum longitudinal length, of the tent 62 when extended by movements of the maintenance device 40. This maximum longitudinal length L1 is at least as long as the working length along the blade 20 such that an entirety of the working length is covered simultaneously by the tent 62 when in the fully extended position.

After reaching this terminal or end position of working movements of the robotic maintenance device 40, the tent 62 can begin to be retracted back to the collapsed position. As such, a next step in the repair method of this invention is shown in Fig. 7. The securing element is first released from engagement with the exterior surface 30 of blade 20 such that the second longitudinal end 64 can be moved again. The tent 62 includes a winching structure of some other similar functioning element to retract or "winch in" the tent 62 by moving the second longitudinal end 64 towards the first longitudinal end 66. The movement and "collapsing" of the tent 62 is shown by movement arrow A7 in this Figure. In this regard, Fig. 7 shows that the tent 62 has been partially retracted, uncovering about half of the curing zone previously covered from the external environment. This movement of the tent 62 is not done until a sufficient cure time has occurred at the regions of the curing zone being uncovered, which may be 2 to 3 minutes in the example provided above. The retraction or winching in can be configured to occur at a speed that will not uncover portions of the curing zone that have not been covered for the necessary cure time, or the control system 50 of the maintenance device 40 can actively control the retraction to assure this coverage time. Alternatively, the maintenance device 40 may remain stationary at the location shown in Fig. 6 and Fig. 7 (with the tent 62 fully extended) for a delay period equal to the curing time and then retract the tent 62 back to the environmental control module 60 when even the portion of the leading edge 22 closest to the maintenance device 40 (e.g., at the end of the repair working length) has had sufficient time to cure the coating 32 on the blade 20.

The movement of the second longitudinal end 64 of tent 62 continues as shown in Fig. 7 until the tent 62 returns to the collapsed position and is fully retracted as shown in Fig. 8. In this operational state at the end of the repair method, the environmental control module 60 is no longer deployed and the maintenance device 40 is ready to be retrieved or removed from the blade 20 (e.g., the maintenance device 40 is generally in the same state as when originally mounted on the blade 20 as shown in Fig. 4, just in a different position on the blade 20). The surface of the blade 20 includes the coating 32 and is therefore repaired back to an original airfoil shape or desirable aerodynamic profile as shown in this state at the end of the repair method of this embodiment.

For this embodiment of the robotic maintenance device 40 and repair method described and shown in Figs. 4-8, an alternative method of retracting the tent 62 may be to reverse the movement of the robotic maintenance device 40 after completing the repairs and reaching the position with the fully extended tent 62 in Fig. 6. It will be understood that in such an alternative, the coating 32 is allowed to fully cure before the maintenance device 40 moves back over these portions of the blade 20 at the leading edge 22. The extension and retraction of the tent 62 can thus be accomplished by operation of the securing element and movements of the maintenance device 40, so as to avoid the need for additional extension or winching equipment. Other alternatives are also possible for moving the tent 62 between the positions shown without departing from the scope of the invention, including one alternative now described in detail with reference to the next set of Figures.

Figs. 9-12 illustrate another embodiment of the environmental control module 160 that may be used with the robotic maintenance device 40, along with a modified set of operational states for the repair method accordingly. The environmental control module 160 again includes a tent 162 which is largely similar in structure to the one previously described, but with a couple of changes included. For example, the tent 162 of this embodiment has a shortened maximum longitudinal length for reasons that will be described now in detail. Elements such as the internal sheet material 72 and the external support framework 74 are essentially unchanged in this embodiment, and so such elements have been labeled with the same reference numbers as in the previous embodiment and are not described again in full detail here for brevity.

In Fig. 9, the robotic maintenance device 40 has just been mounted on the wind turbine blade 20 containing damage 26 along the leading edge 22 as shown. This first operational state is essentially identical to the initial state for the previous embodiment shown in Fig. 4, with the maintenance device 40 positioned at one end of the damage 26 and proximate to a tip end of blade 20. The tent 162 of the environmental control module 160 is in a collapsed state in this initial step as well.

One difference in this embodiment is evident from the next operational step of the method, which is shown in Fig. 10. In this regard, the environmental control module 160 then fully extends the tent 162 of this embodiment to the maximum tent length, which extends the tent 162 towards the tip end of blade 20. The tent 162 deploying or extension is also indicated by movement arrow A9 in Fig. 9. The movement places the second or free longitudinal end 64 of the tent 162 as far away as possible from the first longitudinal end 66 secured to the remainder of the environmental control module 160. Moreover, the tent 162 of this embodiment extends such that the tent 162 has a generally linear extension between the first and second longitudinal ends 66, 64. This linear extension is such that the tent length L2 defined between the first and second longitudinal ends 66, 64 is generally less than the maximum longitudinal length L1 defined by the previous embodiment of tent 62. However, this tent length L2 is sufficient for covering the curing zone in this alternative embodiment.

When extended or deployed as shown in Fig. 10, the linear extension of the tent 162 provides the tent 162 with a rigid shape, specifically the downwardly-facing V-shaped structure as previously described in the previous embodiment. The rigid shape extends generally parallel to the wind turbine blade 20 along the tent length, which results in the V-shaped structure remaining spaced apart from and above the exterior surface 30 of the blade 20 along an entirety of the tent length. Such spacing is shown more clearly in Fig. 10A, which is a cross-section taken anywhere along the tent length. The lower ends 68 of the V-shaped structure are held by the rigid shape of the tent 162 spaced apart from the exterior surface 30 of the blade 20 by a small gap 180 as visible in Fig. 10A. This small gap 180 is not large enough to allow for significant wind flow or rain flow into the curing zone covered by the tent 162, so the covering of the curing zone protects and shields the coating material 32 from any environmental interference around the wind turbine blade 20. To this end, the lower ends 68 of the V-shaped structure are still located generally below the first and second chamfer lines 36 on the coating 32 such that an entirety of the coating 32 is covered by the tent 162 when the latter is deployed as shown. The lower ends may contact the surface of the blade 20 at points between the first and second longitudinal ends 66, 64 which will close the gap 180 around these points.

The robotic maintenance device 40 then moves along the blade 20 towards the root end thereof so conduct repair actions by applying the shaped coating 32 to the leading edge 22 of blade 20, as evidenced by movement arrow A10 in Fig. 10. The maintenance device 40 operates in an identical way to the prior embodiments described above, and the movement continues until an entire working length of the blade 20 containing erosion damage 26 is repaired (see movement arrow A11 in Fig. 11, which is a later operational state following the one shown in Fig. 10). As also shown in Figs. 10 and 11, the tent 162 remains fully extended and in the rigid shape extending away from the environmental control module 160 during this movement of the maintenance device 40, so the entirety of the tent 162 also moves along with the maintenance device 40. The tent 162 is sized with a length that will allow some portion of the tent 162 to remain over the coating material 32 that is still curing following application by the maintenance device 40.

In this regard, the tent length L2 is selected to define a length of the curing zone that allows for full curing of the shaped coating 32 based on input factors including the typical movement speed of the maintenance device 40 driven by the drive and main chassis 42, as well as the curing time period necessary for the coating material 32 being applied. In the example embodiment noted above, the curing time period should be about 2+ minutes to allow for an 80 second cure time to be completed while the coating material 32 remains shielded from the external environment around the blade 20. If the robotic maintenance device 40 is configured to move along the length of the blade 20 at about 6 meters per minute, in this example, then the tent 162 can cover about 12 meters of length behind the maintenance device 40. In another example, the tent length L2 can be made even shorter, such as 3 meters in one particular and potentially preferred example, and then the movement speed of the maintenance device 40 can be controlled to assure that the tent 162 remains in position over the curing zone for the necessary curing time period. It will be understood that as the input factors vary, including others beyond the robot movement speed and the curing time needed for the coating material 32, the tent length L2 may also be adjusted to account for the total space needed to assure a full curing time is provided while still covered by the tent 162. Even though the tent 162 in this embodiment is continuously moving above the curing coating, the spacing apart of the tent 162 from the surface of blade 20 means this movement of the curing zone does not affect the shielding provided for at least the time period in which the tent 162 remains in some portion above that area of the shaped coating 32. Regardless, the "maximum" tent length L2 can generally be shorter in this embodiment as a result of moving the tent 162 for just enough time to allow the curing process to be completed on the blade 20.

After the repair actions over an entire working length of the blade 20 are completed, the maintenance device 40 holds in position as shown in Fig. 12. This hold can be for the curing time period so that the last coating material 32 applied to the blade 20 can fully cure before the tent 162 is retracted. After this curing time period is completed, the environmental control module 160 retracts the tent 162 back to the collapsed position as shown by arrow A12, the tent 162 being fully positioned adjacent to the maintenance device 40 again in the final collapsed position as shown in Fig. 12. Just like the final operational state of the previous embodiment shown in Fig. 8, the maintenance device 40 in this Fig. 12 position is ready for retrieval and pick up off of the leading edge 22 of blade 20. The surface of the blade 20 includes the coating 32 and is therefore repaired back to an original airfoil shape or desirable aerodynamic profile as shown in this state at the end of the repair method of this embodiment.

Fig. 13 illustrates one potential structural arrangement defining the tent 62 of the environmental control module 60 (of any embodiment, though the reference numbers from the first detailed embodiment are used in this view). The tent 62 is structured in a similar style as flexible hose or piping that is used to transfer liquid flows in other fields, such as ventilation and air flow. As described briefly above, this structure of the tent 62 is formed from an internal sheet material 72 that is a flexible cover material that can flex or collapse between connection points to a series of external support framework 74 elements that define the overall shape for the tent 62. Thus, the external support framework 74 includes a series of connected or spaced-apart V-shaped backing elements that are connected to the flexible cover at the positions of junction with the internal sheet material 72. It will be readily understood from this description and Figure as well as the teachings in the art of similar flexible hose and piping devices that this arrangement enables extension and retraction of the tent 62 as desired in the environmental control module 60 of the present invention. When retracted to the collapsed position, the series of elements forming the external support framework 74 are moved to be adjacent one another with the internal sheet material 72 retracted or bunched up between the connection points. When deployed to the extended position, the series of elements forming the external support framework 74 are spaced apart with the internal sheet material 72 being stretched between adjacent ones of the external support framework 74. Even in this stretched condition, the internal sheet material 72 remains effective to block wind flow and rain from entering the space covered by the tent 62, e.g., the curing zone. Other alternative types of structural arrangements for the tent 62 can also be possible, so long as extension and retraction are still enabled with shielding provided of the curing zone when the tent 62 is deployed.

The tent 62 will include appropriate structure as alluded to above for extending and/or retracting. In one example, a mechanical winch-like mechanism may be provided. In another example, which may be used with embodiments like the one shown in Figs. 9-12, the environmental control module 60 may actuate movements of the tent 62 between positions pneumatically, such as with a pressurized air source (not shown) like an air pump. The tent 62 in such embodiments includes support structures that may be extended by filling with air, for example, and as such, the tent 62 can be moved from a collapsed position to the extended position by delivering an air flow into such support structures to force the tent 62 to extend to its full length. Likewise, retraction can be driven in such embodiments by pulling air back out of such support structures, providing a negative pneumatic force that tends to draw the tent 62 back to the retracted or collapsed position. In such embodiments, the air flow may be continuously provided to maintain the rigid, extended shape of the tent 62 while it is to remain deployed, such as in the Figs. 9-12 embodiment where the rigid tent 162 follows along behind movements of the maintenance device 40. It will be appreciated that other known devices and methods of extending and retracting a tent-like structure can be incorporated into other embodiments of the environmental control module 60 without departing from the scope of the invention.

The robotic maintenance device 40 and its environmental control module 60, and the associated repair method described in these embodiments allows for a repair or maintenance action to be taken in an accurate and reliable manner without requiring human operators or rope access technicians on the wind turbine blade 20 itself. Furthermore, the tent 62 of the environmental control module 60 shields the coating material 32 that is applied to make the repairs on the blade 20 during a full extent of the curing time needed to assure that a completed bond is made between the shaped coating 32 and the exterior surface 30 of blade 20. As a result, repairs can still be made successfully and with high precision and reliability even when the blade 20 remains attached on top of a wind turbine 10, as the local environmental conditions around the wind turbine 10 are blocked from adversely affecting the repair. More specifically, the coating material 32 has a controlled environment provided by the tent 62 in which to cure on the blade 20, e.g., the environmental control module 60 blocks local wind and rain as well as provides some control of humidity and temperature in the curing zone. The environmental control module 60 may also be provided to different types of automated or robotic maintenance devices than the one shown in detail in this set of Figures, as the technical benefits of providing temporary environmental shielding are broadly applicable to other contexts and types of robots used in this field as well. Accordingly, lesser categories of blade damage such as erosion damage 26 can be reliably repaired when using this device and method, which will lead turbine operators to perform such routine maintenance on a regular schedule that should mostly avoid damage build up over time that can cause significant operational downtime when blades 20 need to be removed or replaced for complex repair. Thus, the robotic maintenance device, the environmental control module, and method achieves several technical advantages and improves the maintenance field as it relates to wind turbines and wind energy generation.

While the present invention has been illustrated by a description of various preferred embodiments and while these embodiments have been described in some detail, it is not the intention of the Applicant to restrict or in any way limit the scope of the appended claims to such detail. Additional advantages and modifications will readily appear to those skilled in the art. Thus, the various features of the invention may be used alone or in any combination depending on the needs and preferences of the user, within the scope of the claims.

## Claims

1. A robotic maintenance device (40) for repairing damage (26) around a leading edge (22) of a wind turbine blade (20) on a wind turbine (10), the maintenance device (40) comprising :
a main chassis (42) configured to be mounted on the wind turbine blade (20) adjacent the leading edge (22), the main chassis (42) including a drive that operates to move the maintenance device (40) along a longitudinal length of the wind turbine blade (20);
an applicator head (46) coupled with the main chassis (42) at a first end thereof, the applicator head (46) configured to apply a coating material (32) over an exterior surface (30) of the wind turbine blade (20) at a position proximate the leading edge (22), such that the coating material (32) fills in and covers up any damage (26); the robotic maintenance device being **characterized by**
an environmental control module (60) coupled with the main chassis (42) at the first end and proximate the applicator head (46), the environmental control module (60) including a tent (62) configured to be deployed to cover the leading edge (22) of the wind turbine blade (20) along a curing zone defined behind where the applicator head (46) operates, such that the coating material (32) in the curing zone can cure on the wind turbine blade (20) while remaining shielded from local environmental conditions around the wind turbine blade (20).

2. The robotic maintenance device (40) of claim 1, **characterized in that** the tent (62) is selectively extendible and retractable between a collapsed position and an extended position, the tent (62) defining a maximum longitudinal length in the extended position.

3. The robotic maintenance device (40) of claim 2, wherein the tent (62) is further **characterized by**:
an internal sheet material (72) and an external support framework (74) collectively configured to enable extension and retraction of the tent (62), the external support framework (74) providing a consistent cross-sectional shape for the tent (62) and the internal sheet material (72) being defined by a flexible cover that can expand or collapse between connection points with the external support framework (74), the flexible cover being resistant to wind or water flows therethrough.

4. The robotic maintenance device (40) of claim 2 or claim 3, wherein the environmental control module (60) is further **characterized by**:
a pressurized air source that delivers an air flow to provide a pneumatic force to actuate at least one of extension and retraction of the tent (62) between the collapsed and extended positions.

5. The robotic maintenance device (40) of any of the preceding claims, **characterized in that** when deployed, the tent (62) defines an elongated V-shaped structure that is generally aligned with and covers the leading edge (22) of the wind turbine blade (20) and parts of opposing blade sidewalls extending from the leading edge (22) of the wind turbine blade (20).

6. The robotic maintenance device (40) of any of the preceding claims, wherein the tent (62) is further **characterized by**:
a first longitudinal end (66) connected to a remainder of the environmental control module (60) and facing towards the main chassis (42) and the applicator head (46);
a second longitudinal end (64) opposite the first longitudinal end (66), the second longitudinal end (64) defining a free end of the tent (62); and
a securing element located at the second longitudinal free end (64) and configured to fix the second longitudinal end (64) of the tent (62) in position on an exterior surface (30) of the wind turbine blade (20) to thereby hold the second longitudinal end (64) in position.

7. The robotic maintenance device (40) of claim 6, **characterized in that** the tent (62) remains spaced apart from the exterior surface (30) of the wind turbine blade (20) except at an engagement of the securing element to the wind turbine blade (20).

8. The robotic maintenance device (40) of claim 6 or claim 7, **characterized in that** after engaging the securing element of the tent (62) with the wind turbine blade (20), the tent (62) is extended from the collapsed position by moving the first longitudinal end (66) away from the second longitudinal end (64) while the drive moves the main chassis (42) and applicator head (46) along a working length of the leading edge (22) of the wind turbine blade (20).

9. The robotic maintenance device (40) of claim 8, **characterized in that** the maximum longitudinal length of the tent (62) in the extended position is at least as long as the working length defined by where the applicator head (46) performs repair actions on the wind turbine blade (20), thereby allowing an entirety of the working length to be covered by the tent (62) when the tent (62) is in the extended position.

10. The robotic maintenance device (40) of any of claims 1 through 5, **characterized in that** after being deployed, the tent (62) extends linearly away from the environmental control module (60) over a tent length defined between first and second longitudinal ends (66, 64) of the tent (62), with the tent (62) defining a rigid shape that extends generally parallel to the wind turbine blade (20) along the tent length, such that the tent (62) is positioned to be spaced apart from and above the exterior surface (30) of the wind turbine blade (20) along an entirety of the tent length.

11. The robotic maintenance device (40) of claim 10, **characterized in that** the tent length is selected to define a length of the curing zone that will allow for curing of the coating material (32) based on a movement speed of the drive and main chassis (42) along the wind turbine blade (20) as well as a curing time period necessary for the coating material (32).

12. An environmental control module (60) configured to be mounted on a robotic maintenance device (40) in accordance with any one of claims 1 to 11 for repairing damage (26) around a leading edge (22) of a wind turbine blade (20) on a wind turbine (10), the environmental control module (60) comprising :
a tent (62) that is selectively extendible and retractable between a collapsed position and an extended position, wherein in the extended position, the tent (62) extends along a tent length (L1, L2) away from the robotic maintenance device (40) to cover the leading edge (22) of the wind turbine blade (20) along a curing zone defined behind where the robotic maintenance device (40) applies a coating material (32) to the wind turbine blade (20), such that the coating material (32) in the curing zone can cure on the wind turbine blade (20) while remaining shielded from local environmental conditions around the wind turbine blade (20).

13. The environmental control module (60) of claim 12, **characterized in that** when deployed, the tent (62) defines an elongated V-shaped structure that is generally aligned with and covers the leading edge (22) of the wind turbine blade (20) and parts of opposing blade sidewalls extending from the leading edge (22) of the wind turbine blade (20).

14. A method for repairing damage (26) around a leading edge (22) of a wind turbine blade (20) on a wind turbine (10), the method comprising the steps of :
operating the wind turbine (10) to move one of the wind turbine blades (20) to a generally horizontal orientation, and pitching the wind turbine blade (20) in the generally horizontal orientation such that the leading edge (22) of the blade (20) is oriented to face vertically upward;
providing a robotic maintenance device (40) onto the wind turbine blade (20), the robotic maintenance device (40) including a main chassis (42), an applicator head (46) configured to apply a coating material (32) over an exterior surface (30) of the wind turbine blade (20), and an environmental control module (60) including a tent (62);
performing repair actions with the robotic maintenance device (40) by applying the coating material (32) proximate the leading edge (22) of the wind turbine blade (20) as the robotic maintenance device (40) moves along a length of the wind turbine blade (20); and
deploying the tent (62) such that the tent covers the leading edge (22) of the wind turbine blade (20) along a curing zone defined behind where the applicator head (46) operates, thereby to allow the coating material (32) in the curing zone to cure on the wind turbine blade (20) while remaining shielded from local environmental conditions around the wind turbine blade (20).

15. The method of claim 14, wherein the step of deploying the tent (62) is further **characterized by**:
extending the tent (62) from a collapsed position to an extended position to cover the curing zone as the robotic maintenance device (40) performs repair actions; and
retracting the tent (62) back to the collapsed position, which is adjacent the robotic maintenance device (40), after the robotic maintenance device (40) performs repair actions and after the coating material (32) has cured on the wind turbine blade (20).

16. The method of claim 15, wherein the environmental control module (60) includes a pressurized air source, and the method is further **characterized by**:
delivering an air flow with the pressurized air source to provide a pneumatic force to the tent (62) to actuate at least one of extension and retraction of the tent (62) between the collapsed and extended positions.

17. The method of any of claims 14 through 16, wherein the tent (62) includes a first longitudinal end (66) connected to a remainder of the environmental control module (60), a second longitudinal end (64) opposite the first longitudinal end (66) and having a securing element, and the method is further **characterized by**:
affixing the second longitudinal end (64) of the tent (62) in position on the exterior surface (30) of the wind turbine blade (20) by engaging the securing element with the wind turbine blade (20); and
moving the first longitudinal end (66) of the tent (62) away from the second longitudinal end (64) as the robotic maintenance device (40) moves along a working length of the leading edge (22) of the wind turbine blade (20), to thereby deploy and extend the tent (62) and thereby expand the curing zone under the tent (62) as the robotic maintenance device moves (40),
**characterized in that** the tent (62) remains spaced apart from the exterior surface (30) of the wind turbine blade (20) except at an engagement of the securing element to the wind turbine blade (20).

18. The method of any of claims 14 through 17, wherein the tent (62) includes a first longitudinal end (66) connected to a remainder of the environmental control module (60), a second longitudinal end (64) opposite the first longitudinal end (66), and the method is further **characterized by**:
extending the tent (62) by deploying the tent (62) from the environmental control module (60) such that the tent (62) extends linearly away from the environmental control module (60) to define a rigid shape that extends generally parallel to the wind turbine blade (20) over a tent length defined between the first and second longitudinal ends (66, 64) of the tent (62); and
maintaining the tent (62) extended while the robotic maintenance device (40) moves along a working length of the leading edge (22) of the wind turbine blade (20), such that the tent (62) remains spaced apart from and above the exterior surface (30) of the wind turbine blade (20) along an entirety of the tent length, with the curing zone being located under the tent length and the curing zone moving along with movements of the robotic maintenance device (40).

## Patentansprüche

1. Robotergestützte Wartungsvorrichtung (40) zum Reparieren eines Schadens (26) rund um eine Blattvorderkante (22) eines Windkraftanlagenblattes (20) an einer Windkraftanlage (10), wobei die Wartungsvorrichtung (40) Folgendes umfasst:
ein Hauptchassis (42), das konfiguriert ist, um an dem Windkraftanlagenblatt (20) angrenzend an die Blattvorderkante (22) montiert zu werden, wobei das Hauptchassis (42) einen Antrieb beinhaltet, der betrieben wird, um die Wartungsvorrichtung (40) entlang einer Längsausdehnung des Windkraftanlagenblattes (20) zu bewegen;
ein Auftragskopf (46), der mit dem Hauptchassis (42) an einem ersten Ende davon gekoppelt ist, wobei der Auftragskopf (46) konfiguriert ist, um ein Beschichtungsmaterial (32) über eine Außenoberfläche (30) des Windkraftanlagenblattes (20) in einer Position nahe der Blattvorderkante (22) aufzutragen, sodass das Beschichtungsmaterial (32) einen beliebigen Schaden (26) ausfüllt und abdeckt; wobei die robotergestützte Wartungsvorrichtung **gekennzeichnet ist, durch**
ein Umgebungssteuerungsmodul (60), das mit dem Hauptchassis (42) am ersten Ende ist und nahe dem Auftragskopf (46) gekoppelt ist, wobei das Umgebungssteuerungsmodul (60) ein Zelt (62) beinhaltet, das konfiguriert ist, um eingesetzt zu werden, um die Blattvorderkante (22) des Windkraftanlagenblattes (20) entlang einer Aushärtungszone abzudecken, die dahinter definiert ist, wo der Auftragskopf (46) arbeitet, sodass das Beschichtungsmaterial (32) in der Aushärtungszone auf dem Windkraftanlagenblatt (20) aushärten kann, während es gleichzeitig vor den lokalen Umgebungsbedingungen rund um das Windkraftanlagenblatt (20) abgeschirmt bleibt.

2. Robotergestützte Wartungsvorrichtung (40) nach Anspruch 1 **dadurch gekennzeichnet, dass** das Zelt (62) zwischen einer zusammengeklappten Position und einer ausgefahrenen Position selektiv aus- und einfahrbar ist, wobei das Zelt (62) in der ausgefahrenen Position eine maximale Längsausdehnung definiert.

3. Robotergestützte Wartungsvorrichtung (40) nach Anspruch 2, wobei das Zelt (62) weiter **gekennzeichnet ist durch**:
ein inneres Blattmaterial (72) und ein äußeres Stützgerüst (74), die kollektiv konfiguriert sind, um Aus- und Einfahren des Zeltes (62) zu ermöglichen, wobei das äußere Stützgerüst (74) eine konsistente Querschnittsform für das Zelt (62) bereitstellt, und das innere Blattmaterial (72) **durch** eine flexible Abdeckung definiert ist, die zwischen Verbindungspunkten mit dem äußeren Stützgerüst (74) ausfahren oder sich zusammenklappen kann, wobei die flexible Abdeckung gegen Wind und Wasserströme dort hindurch beständig ist.

4. Robotergestützte Wartungsvorrichtung (40) nach Anspruch 2 oder Anspruch 3, wobei das Umgebungssteuerungsmodul (60) weiter **gekennzeichnet ist durch**:
eine Druckluftquelle, die einen Luftstrom abgibt, um eine pneumatische Kraft bereitzustellen, um mindestens eines von Ausfahren oder Einfahren des Zeltes (62) zwischen der zusammengeklappten und ausgefahrenen Position zu betätigen.

5. Robotergestützte Wartungsvorrichtung (40) nach einem der vorstehenden Ansprüche, **dadurch gekennzeichnet, dass** das Zelt (62), wenn es ausgefahren ist, eine längliche V-förmige Struktur definiert, die im Allgemeinen mit der Blattvorderkante (22) des Windkraftanlagenblattes (20) und Teilen gegenüberliegender Blattseitenwände, die sich von der Blattvorderkante (22) des Windkraftanlagenblattes (20) erstrecken, ausgerichtet ist, und diese abdeckt.

6. Robotergestützte Wartungsvorrichtung (40) nach einem der vorstehenden Ansprüche, wobei das Zelt (62) weiter **gekennzeichnet ist durch**:
ein erstes Längsende (66), das mit einem Rest des Umgebungssteuerungsmoduls (60) verbunden ist und zum Hauptchassis (42) und dem Auftragskopf (46) hin zeigt;
ein zweites Längsende (64) gegenüber dem ersten Längsende (66), wobei das zweite Längsende (64) ein freies Ende des Zeltes (62) bildet; und
ein Sicherungselement, das sich am zweiten längsseitigen freien Ende (64) befindet, und konfiguriert ist, um das zweite Längsende (64) des Zeltes (62) in Position auf einer Außenoberfläche (30) des Windkraftanlagenblattes (20) zu fixieren, um **dadurch** das zweite Längsende (64) in Position zu halten.

7. Robotergestützte Wartungsvorrichtung (40) nach Anspruch 6, **dadurch gekennzeichnet, dass** das Zelt (62) außer an einem Eingriff des Sicherungselements mit dem Windkraftanlagenblatt (20) von der Außenoberfläche (30) des Windkraftanlagenblattes (20) beabstandet bleibt.

8. Robotergestützte Wartungsvorrichtung (40) nach Anspruch 6 oder Anspruch 7, **dadurch gekennzeichnet, dass** das Zelt (62) nach Eingreifen des Sicherungselements des Zeltes (62) mit dem Windkraftanlagenblatt (20) durch Wegbewegen des ersten Längsendes (66) vom zweiten Längsende (64) aus der zusammengeklappten Position ausgefahren wird, während der Antrieb das Hauptchassis (42) und den Auftragskopf (46) entlang einer Arbeitslänge der Blattvorderkante (22) des Windkraftanlagenblattes (20) bewegt.

9. Robotergestützte Wartungsvorrichtung (40) nach Anspruch 8, **dadurch gekennzeichnet, dass** die maximale Längsausdehnung des Zeltes (62) in der ausgefahrenen Position mindestens so lang ist wie die Arbeitslänge, die durch den Bereich definiert ist, in dem der Auftragskopf (46) Reparaturmaßnahmen am Windkraftanlagenblatt (20) durchführt, wodurch es der Gesamtheit der Arbeitslänge möglich ist, vom Zelt (62) abgedeckt zu werden, wenn sich das Zelt (62) in der ausgefahrenen Position befindet.

10. Robotergestützte Wartungsvorrichtung (40) nach einem der Ansprüche 1 bis 5 ist **dadurch gekennzeichnet, dass** sich das Zelt (62), nachdem es ausgefahren wurde, linear vom Umgebungssteuerungsmodul (60) über eine zwischen dem ersten und zweiten Längsende (66, 64) des Zeltes (62) definierte Zeltlänge weg erstreckt, wobei das Zelt (62) eine starre Form definiert, die sich im Allgemeinen parallel zum Windkraftanlagenblatt (20) entlang der Zeltlänge erstreckt, sodass das Zelt (62) positioniert ist, um entlang der Gesamtheit der Zeltlänge von und über der Außenoberfläche (30) des Windkraftanlagenblattes (20) beabstandet zu sein.

11. Robotergestützte Wartungsvorrichtung (40) nach Anspruch 10, **dadurch gekennzeichnet, dass** die Zeltlänge ausgewählt ist, um eine Länge der Aushärtungszone zu definieren, welche die Aushärtung des Beschichtungsmaterials (32) basierend auf einer Bewegungsgeschwindigkeit des Antriebs und des Hauptchassis (42) entlang des Windkraftanlagenblattes (20) sowie einer für das Beschichtungsmaterial (32) erforderlichen Aushärtungszeit ermöglicht.

12. Umgebungssteuerungsmodul (60), das konfiguriert ist, um an einer robotergestützten Wartungsvorrichtung (40) nach einem der Ansprüche 1 bis 11 zum Reparieren eines Schadens (26) an der Blattvorderkante (22) eines Windkraftanlagenblattes (20) an einer Windkraftanlage (10) montiert ist, wobei das Umgebungssteuerungsmodul (60) umfasst:
ein Zelt (62), das zwischen einer zusammengeklappten Position und einer ausgefahrenen Position selektiv aus- und einfahrbar ist, wobei sich das Zelt (62) in der ausgefahrenen Position entlang einer Zeltlänge (L1, L2) von der robotergestützten Wartungsvorrichtung (40) weg erstreckt, um die Blattvorderkante (22) des Windkraftanlagenblattes (20) entlang einer Aushärtungszone abzudecken, die dahinter definiert ist, wo die robotergestützte Wartungsvorrichtung (40) ein Beschichtungsmaterial (32) auf das Windkraftanlagenblatt (20) aufträgt, sodass das Beschichtungsmaterial (32) in der Aushärtungszone auf dem Windkraftanlagenblatt (20) aushärten kann, während es gleichzeitig vor den lokalen Umgebungsbedingungen rund um das Windkraftanlagenblatt (20) abgeschirmt bleibt.

13. Umgebungssteuerungsmodul (60) nach Anspruch 12, **dadurch gekennzeichnet, dass** das Zelt (62), wenn es ausgefahren ist, eine längliche V-förmige Struktur definiert, die im Allgemeinen mit der Blattvorderkante (22) des Windkraftanlagenblattes (20) und Teilen gegenüberliegender Blattseitenwände, die sich von der Blattvorderkante (22) des Windkraftanlagenblattes (20) erstrecken, ausgerichtet ist, und diese abdeckt.

14. Verfahren zum Reparieren eines Schadens (26) rund um eine Blattvorderkante (22) eines Windkraftanlagenblattes (20) an einer Windkraftanlage (10), wobei das Verfahren die Schritte umfasst zum:
Betreiben der Windkraftanlage (10), um eines der Windkraftanlagenblätter (20) in einer im Allgemeinen horizontalen Ausrichtung zu bewegen, und Anstellen des Windkraftanlagenblattes (20) in der im Allgemeinen horizontalen Ausrichtung, sodass die Blattvorderkante (22) des Blattes (20) ausgerichtet ist, um vertikal nach oben zu zeigen;
Bereitstellen einer robotergestützten Wartungsvorrichtung (40) auf das Windkraftanlagenblatt (20), wobei die robotergestützte Wartungsvorrichtung (40) ein Hauptchassis (42), einen Auftragskopf (46) zum Auftragen eines Beschichtungsmaterials (32) auf eine Außenoberfläche (30) des Windkraftanlagenblattes (20) und ein Umgebungssteuerungsmodul (60), das ein Zelt (62) beinhaltet, beinhaltet;
Durchführen von Reparaturmaßnahmen mit der robotergestützten Wartungsvorrichtung (40) durch Auftragen des Beschichtungsmaterials (32) nahe der Blattvorderkante (22) des Windkraftanlagenblattes (20), wenn sich die robotergestützte Wartungsvorrichtung (40) entlang der Länge des Windkraftanlagenblattes (20) bewegt; und
Ausfahren des Zeltes (62), sodass das Zelt die Blattvorderkante (22) des Windkraftanlagenblattes (20) entlang einer Aushärtungszone abdeckt, die dahinter definiert ist, wo der Auftragskopf (46) arbeitet, wodurch es dem Beschichtungsmaterial (32) ermöglicht wird, in der Aushärtungszone auf dem Windkraftanlagenblatt (20) auszuhärten, während es vor lokalen Umgebungsbedingungen rund um das Windkraftanlagenblatt (20) abgeschirmt bleibt.

15. Verfahren nach Anspruch 14, wobei der Schritt zum Ausfahren des Zeltes (62) weiter **gekennzeichnet ist durch**:
Ausfahren des Zeltes (62) von einer zusammengeklappten Position in eine ausgefahrene Position, um die Aushärtungszone abzudecken, wenn die robotergestützte Wartungsvorrichtung (40) Reparaturmaßahmen durchführt; und
Einfahren des Zeltes (62) zurück in die zusammengeklappte Position, die sich angrenzend an die robotergestützte Wartungsvorrichtung (40) befindet, nachdem die robotergestützte Wartungsvorrichtung (40) Reparaturmaßnahmen durchgeführt hat, und nachdem das Beschichtungsmaterial (32) auf dem Windkraftanlagenblatt (20) ausgehärtet ist.

16. Verfahren nach Anspruch 15, wobei das Umweltsteuerungsmodul (60) eine Druckluftquelle beinhaltet, und das Verfahren weiter **gekennzeichnet ist durch**:
Abgeben eines Luftstroms mit der Druckluftquelle, um dem Zelt (62) eine pneumatische Kraft bereitzustellen, um mindestens eines von Ausfahren und Einfahren des Zeltes (62) zwischen der zusammengeklappten und der ausgefahrenen Position zu betätigen.

17. Verfahren nach einem der Ansprüche 14 bis 16, wobei das Zelt (62) ein erstes Längsende (66) beinhaltet, das mit einem Rest des Umweltsteuerungsmoduls (60) verbunden ist, ein zweites Längsende (64) gegenüber dem ersten Längsende (66) und ein Sicherungselement aufweist, und das Verfahren weiter **gekennzeichnet ist durch**:
Fixieren des zweiten Längsendes (64) des Zeltes (62) an der Außenoberfläche (30) des Windkraftanlagenblattes (20), **durch** Eingreifen des Sicherungselements mit dem Windkraftanlagenblatt (20) in; und
Bewegen des ersten Längsendes (66) des Zeltes (62) wird vom zweiten Längsende (64) weg, wenn sich die robotergestützte Wartungsvorrichtung (40) entlang der Arbeitslänge der Blattvorderkante (22) des Windkraftanlagenblattes (20) bewegt, um dadurch das Zelt (62) einzusetzen und auszufahren und damit die Aushärtungszone unter dem Zelt (62) zu erstrecken, wenn sich die robotergestützte Wartungsvorrichtung (40) bewegt,
**dadurch** gekennzeichnet, dass das Zelt (62) außer an einem Eingriff des Sicherungselements mit dem Windkraftanlagenblatt (20) von der Außenoberfläche (30) des Windkraftanlagenblattes (20) beabstandet bleibt.

18. Verfahren nach einem der Ansprüche 14 bis 17, wobei das Zelt (62) ein erstes Längsende (66) beinhaltet, das mit einem Rest des Umweltsteuerungsmoduls (60) verbunden ist, ein zweites Längsende (64) gegenüber dem ersten Längsende (66) verbunden ist, und das Verfahren weiter **gekennzeichnet ist durch**:
Erstrecken des Zeltes (62) **durch** Einsetzen des Zeltes (62) vom Umweltsteuerungsmodul (60), sodass sich das Zelt (62) linear vom Umweltsteuerungsmodul (60) weg erstreckt, um eine starre Form zu definieren, die sich im Allgemeinen parallel zum Windkraftanlagenblatt (20) über eine zwischen dem ersten und zweiten Längsende (66, 64) des Zeltes (62) definierte Zeltlänge erstreckt; und
Erstreckt-halten des Zeltes (62), während sich die robotergestützte Wartungsvorrichtung (40) entlang einer Arbeitslänge der Blattvorderkante (22) des Windkraftanlagenblattes (20) bewegt, sodass das Zelt (62) entlang einer Gesamtheit der Zeltlänge von und über der Außenoberfläche (30) des Windkraftanlagenblattes (20) beabstandet bleibt, wobei sich die Aushärtungszone unterhalb der Zeltlänge befindet und sich die Aushärtungszone zusammen mit den Bewegungen der robotergestützte Wartungsvorrichtung (40) bewegt.

## Revendications

1. Dispositif de maintenance robotisé (40) destiné à réparer des dommages (26) autour d'un bord d'attaque (22) d'une pale d'éolienne (20) sur une éolienne (10), le dispositif de maintenance (40) comprenant :
un châssis principal (42) configuré pour être monté sur la pale d'éolienne (20) à proximité du bord d'attaque (22), le châssis principal (42) incluant un entraînement qui permet de déplacer le dispositif de maintenance (40) le long d'une longueur longitudinale de la pale d'éolienne (20) ;
une tête d'application (46) couplée au châssis principal (42) à une première extrémité de celui-ci, la tête d'application (46) étant configurée pour appliquer un matériau de revêtement (32) sur une surface extérieure (30) de la pale d'éolienne (20) à proximité du bord d'attaque (22), de sorte que le matériau de revêtement (32) comble et masque tout dommage (26) ; le dispositif de maintenance robotisé étant **caractérisé par**
un module de commande environnemental (60) couplé au châssis principal (42) à la première extrémité et à proximité de la tête d'application (46), le module de commande environnemental (60) incluant une tente (62) configurée pour être déployée afin de couvrir le bord d'attaque (22) de la pale d'éolienne (20) le long d'une zone de durcissement définie derrière l'endroit où fonctionne la tête d'application (46), de sorte que le matériau de revêtement (32) dans la zone de durcissement puisse durcir sur la pale d'éolienne (20) tout en restant protégé des conditions environnementales locales autour de la pale d'éolienne (20).

2. Dispositif de maintenance robotisé (40) selon la revendication 1, **caractérisé en ce que** la tente (62) est extensible et rétractable de manière sélective entre une position repliée et une position étendue, la tente (62) définissant une longueur longitudinale maximale en position étendue.

3. Dispositif de maintenance robotisé (40) selon la revendication 2, dans lequel la tente (62) est en outre **caractérisée par** :
un matériau de feuille interne (72) et un cadre de support externe (74) configurés collectivement pour permettre l'extension et la rétraction de la tente (62), le cadre de support externe (74) fournissant une forme de section transversale cohérente à la tente (62) et le matériau de feuille interne (72) étant défini par une couverture flexible qui peut s'étendre ou se replier entre des points de connexion avec le cadre de support externe (74), la couverture flexible étant résistante au vent ou aux flux d'eau qui la traversent.

4. Dispositif de maintenance robotisé (40) selon la revendication 2 ou la revendication 3, dans lequel le module de commande environnemental (60) est en outre **caractérisé par** :
une source d'air comprimé qui fournit un flux d'air pour conférer une force pneumatique pour actionner au moins une de l'extension et la rétraction de la tente (62) entre les positions repliée et étendue.

5. Dispositif de maintenance robotisé (40) selon l'une quelconque des revendications précédentes, **caractérisé en ce que**, lorsqu'elle est déployée, la tente (62) définit une structure allongée en forme de V qui est généralement alignée avec et couvre le bord d'attaque (22) de la pale d'éolienne (20) et des parties de parois latérales de pale opposées s'étendant à partir du bord d'attaque (22) de la pale d'éolienne (20).

6. Dispositif de maintenance robotisé (40) selon l'une quelconque des revendications précédentes, dans lequel la tente (62) est en outre **caractérisée par** :
une première extrémité longitudinale (66) reliée à un reste du module de commande environnemental (60) et faisant face au châssis principal (42) et à la tête d'application (46) ;
une seconde extrémité longitudinale (64) opposée à la première extrémité longitudinale (66), la seconde extrémité longitudinale (64) définissant une extrémité libre de la tente (62) ; et
un élément de fixation situé à la seconde extrémité longitudinale libre (64) et configuré pour fixer la seconde extrémité longitudinale (64) de la tente (62) en position sur une surface extérieure (30) de la pale d'éolienne (20) afin de maintenir la seconde extrémité longitudinale (64) en position.

7. Dispositif de maintenance robotisé (40) selon la revendication 6, **caractérisé en ce que** la tente (62) reste espacée de la surface extérieure (30) de la pale d'éolienne (20) sauf lors de la mise en prise de l'élément de fixation avec la pale d'éolienne (20).

8. Dispositif de maintenance robotisé (40) selon la revendication 6 ou la revendication 7, **caractérisé en ce que**, après la mise en prise de l'élément de fixation de la tente (62) avec la pale d'éolienne (20), la tente (62) est étendue à partir de la position repliée en éloignant la première extrémité longitudinale (66) de la seconde extrémité longitudinale (64) tandis que l'entraînement déplace le châssis principal (42) et la tête d'application (46) le long d'une longueur de travail du bord d'attaque (22) de la pale d'éolienne (20).

9. Dispositif de maintenance robotisé (40) selon la revendication 8, **caractérisé en ce que** la longueur longitudinale maximale de la tente (62) en position étendue est au moins égale à la longueur de travail définie par l'endroit où la tête d'application (46) réalise des actions de réparation sur la pale d'éolienne (20), permettant ainsi à la tente (62) de couvrir l'intégralité de la longueur de travail lorsque la tente (62) est en position étendue.

10. Dispositif de maintenance robotisé (40) selon l'une quelconque des revendications 1 à 5, **caractérisé en ce que**, après avoir été déployée, la tente (62) s'éloigne linéairement du module de commande environnemental (60) sur une longueur de tente définie entre les première et seconde extrémités longitudinales (66, 64) de la tente (62), la tente (62) définissant une forme rigide qui s'étend généralement parallèlement à la pale d'éolienne (20) sur toute la longueur de la tente, de sorte que la tente (62) soit positionnée de manière à être espacée et au-dessus de la surface extérieure (30) de la pale d'éolienne (20) sur toute la longueur de la tente.

11. Dispositif de maintenance robotisé (40) selon la revendication 10, **caractérisé en ce que** la longueur de la tente est sélectionnée pour définir une longueur de la zone de durcissement qui permettra le durcissement du matériau de revêtement (32) sur la base d'une vitesse de déplacement de l'entraînement et du châssis principal (42) le long de la pale d'éolienne (20) ainsi que d'une période de durcissement nécessaire au matériau de revêtement (32).

12. Module de commande environnemental (60) configuré pour être monté sur un dispositif de maintenance robotisé (40) selon l'une quelconque des revendications 1 à 11 pour réparer des dommages (26) autour d'un bord d'attaque (22) d'une pale d'éolienne (20) sur une éolienne (10), le module de commande environnemental (60) comprenant :
une tente (62) qui est extensible et rétractable de manière sélective entre une position repliée et une position étendue, dans lequel, en position étendue, la tente (62) s'étend sur une longueur de tente (L1, L2) à l'écart du dispositif de maintenance robotisé (40) pour couvrir le bord d'attaque (22) de la pale d'éolienne (20) le long d'une zone de durcissement définie derrière l'endroit où le dispositif de maintenance robotisé (40) applique un matériau de revêtement (32) sur la pale d'éolienne (20), de sorte que le matériau de revêtement (32) dans la zone de durcissement puisse durcir sur la pale d'éolienne (20) tout en restant protégé des conditions environnementales locales autour de la pale d'éolienne (20).

13. Module de commande environnemental (60) selon la revendication 12, **caractérisé en ce que**, lorsqu'elle est déployée, la tente (62) définit une structure allongée en forme de V qui est généralement alignée avec et couvre le bord d'attaque (22) de la pale d'éolienne (20) et des parties de parois latérales opposées de la pale s'étendant à partir du bord d'attaque (22) de la pale d'éolienne (20).

14. Procédé de réparation de dommages (26) autour d'un bord d'attaque (22) d'une pale d'éolienne (20) sur une éolienne (10), le procédé comprenant les étapes de :
fonctionnement de l'éolienne (10) pour déplacer une des pales d'éolienne (20) vers une orientation généralement horizontale ; et calage de la pale d'éolienne (20) dans l'orientation généralement horizontale de sorte que le bord d'attaque (22) de la pale (20) soit orienté verticalement vers le haut ;
fourniture d'un dispositif de maintenance robotisé (40) sur la pale d'éolienne (20), le dispositif de maintenance robotisé (40) incluant un châssis principal (42), une tête d'application (46) configurée pour appliquer un matériau de revêtement (32) sur une surface extérieure (30) de la pale d'éolienne (20), et un module de commande environnemental (60) incluant une tente (62) ;
réalisation d'opérations de réparation avec le dispositif de maintenance robotisé (40) en appliquant le matériau de revêtement (32) à proximité du bord d'attaque (22) de la pale d'éolienne (20) lorsque le dispositif de maintenance robotisé (40) se déplace le long de la pale d'éolienne (20) ; et
déploiement de la tente (62) de telle sorte que la tente couvre le bord d'attaque (22) de la pale d'éolienne (20) le long d'une zone de durcissement définie derrière l'endroit où fonctionne la tête d'application (46), afin de permettre au matériau de revêtement (32) dans la zone de durcissement de durcir sur la pale d'éolienne (20) tout en restant protégé des conditions environnementales locales autour de la pale d'éolienne (20).

15. Procédé selon la revendication 14, dans lequel l'étape de déploiement de la tente (62) est en outre **caractérisée par** :
l'extension de la tente (62) d'une position repliée à une position étendue pour couvrir la zone de séchage pendant que le dispositif de maintenance robotisé (40) réalise des opérations de réparation ; et
la rétraction de la tente (62) jusqu'à la position repliée, adjacente au dispositif de maintenance robotisé (40), après que le dispositif de maintenance robotisé (40) a réalisé des actions de réparation et après que le matériau de revêtement (32) a durci sur la pale d'éolienne (20).

16. Procédé selon la revendication 15, dans lequel le module de commande environnemental (60) inclut une source d'air comprimé, et le procédé est en outre **caractérisé par** :
la fourniture d'un flux d'air avec la source d'air comprimé pour conférer une force pneumatique à la tente (62) pour actionner au moins une d'une extension et d'une rétraction de la tente (62) entre les positions repliée et étendue.

17. Procédé selon l'une quelconque des revendications 14 à 16, dans lequel la tente (62) inclut une première extrémité longitudinale (66) reliée à une partie restante du module de commande environnemental (60), une seconde extrémité longitudinale (64) opposée à la première extrémité longitudinale (66) et présentant un élément de fixation, et le procédé est en outre **caractérisé par** :
la fixation de la seconde extrémité longitudinale (64) de la tente (62) en position sur la surface extérieure (30) de la pale d'éolienne (20) en mettant l'élément de fixation en prise avec la pale d'éolienne (20) ; et
l'éloignement de la première extrémité longitudinale (66) de la tente (62) de la seconde extrémité longitudinale (64) lorsque le dispositif de maintenance robotisé (40) se déplace le long d'une longueur de travail du bord d'attaque (22) de la pale d'éolienne (20), afin de déployer et d'étendre la tente (62) et d'étendre ainsi la zone de séchage sous la tente (62) lorsque le dispositif de maintenance robotisé se déplace (40),
**caractérisé en ce que** la tente (62) reste espacée de la surface extérieure (30) de la pale d'éolienne (20) sauf au niveau d'une mise en prise de l'élément de fixation avec la pale d'éolienne (20).

18. Procédé selon l'une quelconque des revendications 14 à 17, dans lequel la tente (62) inclut une première extrémité longitudinale (66) reliée à une partie restante du module de commande environnemental (60), une seconde extrémité longitudinale (64) opposée à la première extrémité longitudinale (66), et le procédé est en outre **caractérisé par** :
l'extension de la tente (62) en déployant la tente (62) à partir du module de commande environnemental (60) de sorte que la tente (62) s'étende linéairement à partir du module de commande environnemental (60) pour définir une forme rigide qui s'étend généralement parallèlement à la pale d'éolienne (20) sur une longueur de tente définie entre les première et seconde extrémités longitudinales (66, 64) de la tente (62) ; et
le maintien de la tente (62) étendue pendant que le dispositif de maintenance robotisé (40) se déplace le long d'une longueur de travail du bord d'attaque (22) de la pale d'éolienne (20), de sorte que la tente (62) reste espacée et au-dessus de la surface extérieure (30) de la pale d'éolienne (20) sur toute la longueur de la tente, la zone de durcissement étant située sous la longueur de la tente et se déplaçant avec les mouvements du dispositif de maintenance robotisé (40).
